# EUROPÄISCHE PATENTSCHRIFT

(11) **EP 0 896 041 B1**
(45) Veröffentlichungstag und Bekanntmachung des Hinweises auf die Patenterteilung: **21.11.2001**
(21) Anmeldenummer: 98112244.3
(22) Anmeldetag: 02.07.1998
(51) Int. Cl.: C09D 183/07, C09J 7/02

(54) **Trennkraftregulierung klebrige Stoffe abweisender Siliconbeschichtungen**
Controlled release silicone coatings
Revêtements de polysiloxane à adhésivité contrôlée

(30) Priorität: 07.08.1997 DE 19734260
(43) Veröffentlichungstag der Anmeldung: 10.02.1999
(73) Patentinhaber: Wacker-Chemie GmbH, 81737 München (DE)
(72) Erfinder: Achenbach, Frank, Dr., 84359 Simbach/Inn (DE); Fehn, Armin, Dr., 84547 Emmerting (DE); Hechtl, Wolfgang, Dr., 84489 Burghausen (DE); Kinne, Margot, 84547 Emmerting (DE)
(74) Vertreter: Fritz, Helmut, Dr.

(56) Entgegenhaltungen:
- GB-A- 2 320 251
- US-A- 4 857 564
- US-A- 5 545 831

## Beschreibung

Die Erfindung betrifft ein Verfahren zur Trennkraftregulierung von Siliconbeschichtungen und zu Siliconbeschichtungen vernetzbare Massen.

Siliconbeschichtungsmassen können auf beliebige Substrate, die gegenüber klebrigen Stoffen abweisend gemacht werden sollen, aufgebracht und zu einem elastomeren Siliconüberzug vernetzt werden. Das hohe Ausmaß der Abweisung klebriger Stoffe ist eines der spezifischen Charakteristika der Silicone und darüberhinaus auch jener Materialien, die erheblichenteils aus Diorganosiloxan-Einheiten bestehen. Essentieller Bestandteil aller Siliconbeschichtungsmassen ist folglich ein Organopolysiloxan, welches - je nach Art der Vernetzung - ggf. funktionalisiert sein kann. Darüberhinaus können Katalysatoren, Vernetzer, Photosensibilisatoren, Lösungsmittel, Emulgatoren, Füllstoffe, Harze etc. enthalten sein. Die Vernetzung der aufgebrachten Siliconbeschichtungsmasse zu einem elastomeren Siliconüberzug kann thermisch, mittels energiereicher Teilchen oder elektromagnetischer Strahlung oder durch eine Kombination der voranstehend genannten Arten erfolgen bzw. beschleunigt werden, wobei die thermisch-induzierte Additionsvernetzung durch Umsetzung alkenylfunktioneller Organopolysiloxane mit SiH-haltigen Vernetzern, die Platin-katalysierte Hydrosilylierung besonders große praktische Bedeutung erlangt hat. Neben der Additionsvernetzung wurden auch kondensationsvernetzende, peroxidisch vernetzende und strahlungsvernetzende Siliconbeschichtungsmassen beschrieben.

Siliconbeschichtungsmassen können auch hinsichtlich ihres Gehaltes an Lösemitteln oder anderweitig unterschieden werden. Beispielsweise können die vernetzungsfähigen Siliconbeschichtungsmassen lösemittelhaltig oder bevorzugt lösemittelfrei sein, oder auch als wäßrige Emulsion vorliegen.

Das Ausmaß der Abweisung klebriger Stoffe durch die Siliconbeschichtung läßt sich mit Hilfe der Trennkraft quantifizieren. Die Trennkraft stellt ein Maß für jene Kraft dar, die aufgewendet werden muß, um den Delaminationsvorgang eines standardisierten Haftverbundes, welcher z.B. ein Laminat aus einem siliconisierten Trennpapier und einem kleberbeschichteten Teststreifen darstellt, mit einer vorgegebenen Trenngeschwindigkeit in Gang zu halten, z.B. gemäß der FINAT-Testmethoden. Je größer die gemessene Trennkraft ist, desto fester haftet das selbstklebende Material auf dem siliconisierten Trennpapier. Die Trennkraft hängt neben zahlreichen anderen Faktoren, wie Temperatur, Trenngeschwindigkeit, Abzugswinkel, Schichtdicke des Klebermaterials, Anpreßdruck bei der Herstellung des Haftverbundes etc. vor allem von der Art des klebrigen Stoffes und dem Typ der Siliconbeschichtung ab. Da die Art des klebrigen Stoffes durch die jeweilige Anwendung vorgegeben wird, ist es von entscheidender Bedeutung, die Trenneigenschaften der Siliconbeschichtung gezielt einstellen zu können, d.h. den anwendungstechnischen Erfordernissen anzupassen. Beispielsweise sollen siliconisierte Trennpapiere, die zur Verpackung klebriger Materialien verwendet werden oder als Unterlage für Teigwaren während des Backvorganges dienen, ein möglichst hohes Ausmaß der Abweisung klebriger Stoffe aufweisen, was niedrigsten Werten der Trennkraft entspricht. Hingegen müssen siliconisierte Trennpapiere, die als Unterlage für Etiketten dienen - je nach Größe des Etikettenpapiers - ein höheres Trennkraftniveau besitzen, da sich andernfalls das Etikett vorzeitig von der Unterlage lösen könnte. Tatsächlich sind die Anforderungen an das Trennverhalten der Siliconbeschichtungen noch weit diffiziler. So wird im allgemeinen nicht nur ein bestimmtes Trennkraftniveau gegenüber einem speziellen Kleber gefordert, sondern dieses soll auch eine vorgegebene Abhängigkeit von der Trenngeschwindigkeit zeigen. Beispielsweise soll die Trennkraft der relativ kleinen Etiketten, die der Auspreisung von Konsumgütern dienen, im Ruhezustand und bei niedriger Abzugsgeschwindigkeit möglichst hoch sein, um ein vorzeitiges Ablösen im Spendeautomat auszuschließen, während die Trennkraft bei hoher Abzugsgeschwindigkeit möglichst niedrig sein soll, um ein rißfreies und zügiges maschinelles Auspreisen zu ermöglichen. In anderen Anwendungen wird ein gegenteiliges Verhalten gefordert, nämlich hohe Trennkraft bei hoher Abzugsgeschwindigkeit oder es wird ein von der Trenngeschwindigkeit, die auch als Abzugsgeschwindigkeit bezeichnet wird, unabhängiges Trennkraftverhalten gewünscht. Spezielle Anforderungen an die Temperaturabhängigkeit des Trennkraftniveaus werden beispielsweise an Laserdrucker-geeignete Etikettenpapiere gestellt.

Die gezielte, reproduzierbare, lagerzeitunabhängige Einstellung des dynamischen Trennkraftverhaltens einer Siliconbeschichtung stellt somit ein entscheidendes Kriterium für deren Anwendbarkeit dar.

Siliconbeschichtungen weisen in aller Regel ein sehr niedriges Trennkraftniveau auf, d.h., das Ausmaß der Abweisung klebriger Stoffe ist sehr hoch. Deshalb besteht das Problem einer gezielten Einstellung des Trennverhaltens hauptsächlich darin, eine Trennkrafterhöhung zu bewirken. Diese gezielte Trennkrafterhöhung wird als Controlled Release (CR) bezeichnet und die hierfür verwendeten Additive entsprechend als Controlled-Release Additives (CRAs).

Als zum Stand der Technik gehörend, lassen sich zahlreiche Möglichkeiten einer gezielten Einstellung, insbesondere Erhöhung des Trennkraftniveaus anführen:

Beispielsweise ist bekannt, daß eine Erhöhung des gewichtsmäßigen Anteils organischer Gruppen im Organopolysiloxan, z.B. durch Ersatz eines Teils der Methyl- durch Phenyl-Gruppen oder andere höhermolekulare organische Reste, mit einer Anhebung der Trennkraft-Werte gegenüber einer Reihe klebriger Stoffe verbunden ist. Allgemein kann festgestellt werden, was naheliegend ist, daß mit zunehmendem organischen Charakter der Siliconkautschukmasse die silicontypischen Trenneigenschaften zurückgedrängt werden, wodurch das Ausmaß der Abweisung klebriger Stoffe vermindert wird. Eine Erhöhung des organischen Charakters einer Siliconbeschichtungsmasse läßt sich auf vielfältige Art und Weise bewerkstelligen. Beispielsweise kann dies durch zunehmenden Ersatz der im Organopolysiloxan typischerweise vorhandenen Methyl-Gruppen durch höhermolekulare und insbesondere höherpolare organische Reste erfolgen; eine andere Möglichkeit besteht im Einbau zweiwertiger organischer Reste in die Siloxan-Hauptkette. Des weiteren kann das Organopolysiloxan teilweise durch organische Verbindungen, insbesondere organische Oligomere oder Polymere, ersetzt werden, welche gegebenenfalls mit funktionellen Gruppen ausgestattet sind, um ein Einvernetzen in das Siliconnetzwerk zu ermöglichen und gleichzeitig ein unerwünschtes Ausschwitzen an der Oberfläche der Siliconbeschichtung auszuschließen. Obgleich derartige Methoden der Trennkraftregulierung prinzipiell möglich sind, müssen bei deren Anwendung doch zahlreiche Nachteile in Kauf genommen werden. So wäre es erforderlich, das den Hauptbestandteil bildende Organopolysiloxan zu modifizieren, wobei der organische Anteil im Organopolysiloxan drastisch erhöht werden müßte, um hohe Trennkraft-Werte zu erzielen; die Herstellung von Organopolysiloxanen mit höhermolekularen organischen Resten, Block-Copolymeren usw. ist jedoch sehr aufwendig; aufgrund unterschiedlicher Klebertypen und Trennkraftanforderungen müßte zudem eine Palette unterschiedlich modifizierter Organopolysiloxane bereitgestellt werden. Auch die Trennkraftregulierung durch Zugabe organischer, insbesondere höherpolarer Verbindungen zur Siliconbeschichtungsmasse ist wenig aussichtsreich, da massive Verträglichkeitsprobleme auftreten, die eine reproduzierbare, lagerzeitunabhängige Einstellung des Trennkraftniveaus verhindern. Zudem kann durch derartige Zusätze die Vernetzungsreaktion beeinträchtigt werden.

Besonders große Bedeutung als CRAs haben harzartige Zusätze erlangt, welche essentiell SiO_{4/2}- und/oder RSiO_{3/2}-Einheiten, darüberhinaus auch R₃SiO_{1/2}- und gegebenenfalls R₂SiO_{2/2}-Einheiten enthalten, wobei R gleich oder verschieden, -H oder -OH sein kann oder einen beliebigen substituierten oder nichtsubstituierten organischen Rest darstellt. In EP-A-652 258 sind Siliconharze und in US-A-4,611,042 harzartige Siloxancopolymere als CRA's beschrieben. Als Nachteile dieser CRA's treten u.a. in Erscheinung:
Erst bei sehr hohem Gehalt an Siliconharz wird die Trennkraft deutlich erhöht;
Siliconharze sind teuer;
Siliconharze verursachen einen unerwünschten erheblichen Viskositätsanstieg der Siliconbeschichtungsmasse, was durch Wahl kürzerkettiger Siliconpolymere bzw. durch Zuhilfenahme von unerwünschten Lösungsmitteln kompensiert werden muß;
Siliconharze erhöhen häufig den extrahierbaren Anteil des vernetzten Siliconfilms, was sich in niedrigeren Werten der Restklebkraft äußert. Beispielsweise haftet ein Preisetikett, welches von einem solchen siliconisierten Papier abgezogen wird, schlecht auf dem Gebrauchsgegenstand, weil der Kleber des Etiketts mit Silicon kontaminiert wird;
Mit Siliconharzen kann häufig nicht bewirkt werden, daß die Trennkraft bei niedriger Abzugsgeschwindigkeit niedrig und bei hoher Abzugsgeschwindigkeit hoch ist;
Die Herstellung T- und/oder Q-Einheiten enthaltender Organopolysiloxane ist relativ aufwendig. Gefahr der Vergelung besteht. Der Vorteil der leichten Zugänglichkeit linearer Organopolysiloxane wird aufgegeben;
Siliconharze verschlechtern die Vulkanisationscharakteristik, d.h., die Vernetzungsgeschwindigkeit wird herabgesetzt. Kürzeste Vernetzungszeit ist jedoch ein entscheidendes Kriterium für die meisten Anwendungen von Siliconbeschichtungsmassen, wie der Siliconisierung von Trennpapieren.

US-A-5,545,831 beschreibt ein nicht notwendigerweise SiH-haltiges, jedoch in jedem Fall zwischen Si-Atomen Alkylengruppen enthaltendes lineares Organosiloxan, welches als CRA für Siliconbeschichtungsmassen eingesetzt werden kann, ohne die Restklebkraft negativ zu beeinflussen. Die offenbarten CRAs verfügen, wenn überhaupt, nur über kettenendständiges SiH. Die kettenendständige SiH-Gruppe, die auch eine Alkenylgruppe sein kann, dient offensichtlich der Einvernetzung des CRA's; die trennkrafterhöhende Wirkung erfolgt durch die Alkylengruppen, d.h. durch das Einbringen organischer Reste. Nachteilig ist, daß derartige CRAs erst bei hohem Gehalt eine deutliche Trennkrafterhöhung bewirken.

EP-A-605 227 offenbart ein Verfahren der Trennkraftregulierung, welches auf einer gezielten Einstellung der Vernetzungsdichte bzw. des Moduls der Siliconbeschichtung beruht. Insbesondere wird eine Erhöhung der Trennkraft bei hoher Abzugsgeschwindigkeit dadurch erzielt, indem ein alkenyl-endständiges Organopolysiloxan mit einem SiH-endständigen Organopolysiloxan kombiniert wird, was aufgrund der im Zuge der Vernetzung ablaufenden Kettenverlängerung zu einem Siliconfilm mit geringerer Netzpunktdichte und niedrigerem Modul und damit höherem Trennwert bei hoher Abzugsgeschwindigkeit führt. Nachteile dieser Methode bestehen darin, daß eine Trennkraftregelung nur bei hoher Abzugsgeschwindigkeit erzielt werden kann, diese zudem nur innerhalb enger Grenzen variabel ist, da sich Veränderungen der Netzpunktdichte auch auf die mechanische Festigkeit, insbesondere die Abriebbeständigkeit auswirken. Des weiteren wird mit zunehmendem Anteil SiH-endständiger Organopolysiloxane die Restklebkraft nachteilig beeinflußt. Es wird dort ausdrücklich betont, daß der zusätzlich erforderliche SiH-Vernetzer in der Siliconbeschichtungsmasse löslich sein muß.

EP-A-355 381 beschreibt eine Kontrolle des Trennkraftverhaltens von Siliconbeschichtungen durch Verwendung eines nicht notwendigerweise SiH-haltigen Organosiloxanes, welches eine ausreichende Anzahl monofunktioneller phenolischer Struktureinheiten besitzt.

DE-A-25 09 620 beschreibt ein Verfahren der Trennkraftregulierung für additionsvernetzende Siliconbeschichtungsmassen, welche als Hauptbestandteil Diorganopolysiloxane (I) enthalten, bei denen 3 bis 30 Mol.-% der nichtendständigen Siloxaneinheiten Diphenylsiloxaneinheiten und mindestens 50 % der Anzahl der organischen Reste in den übrigen Siloxaneinheiten Methylreste sind. Durch Kombination dieser phenylhaltigen Diorganopolysiloxane (I) mit mindestens drei Si-gebundene Wasserstoffatome tragenden Organopolysiloxanen (II) kann durch unterschiedliche Konzentration an Si-gebundenem Wasserstoff im Organopolysiloxan (II) die Trennkraft der resultierenden Siliconbeschichtung kontinuierlich in weiten Grenzen verändert werden. Nachteilig erweist sich hier u.a. die Notwendigkeit, phenylhaltige Organopolysiloxane als Hauptbestandteil zu verwenden sowie eine relativ große Anzahl unterschiedlicher SiH-haltiger Organopolysiloxane (II) bereitzustellen.

Der vorliegenden Erfindung liegt daher die Aufgabe zugrunde, zu Siliconbeschichtungen vernetzbare Massen bereitzustellen, deren Trennverhalten stufenlos, reproduzierbar und lagerzeitunabhängig einstellbar ist und welche die vorstehenden Nachteile bekannter Verfahren zur Trennkraftregulierung nicht aufweisen.

Gegenstand der Erfindung ist ein Verfahren zur Trennkraftregulierung von Siliconbeschichtungen, welche durch Vernetzung von Massen erhalten werden, welche die Bestandteile
(A) alkenylfunktionelles Polyorganosiloxan und
(B) SiH-funktionelles Organosiloxan umfassen,
wobei die Regulierung der Trennkraft durch Einsatz eines SiH-funktionellen Organosiloxans (B) erfolgt, das 0,1 bis 60 Mol-% an mit den Massen unverträglichen Resten aufweist, wobei die Reste mit den Massen dann als unverträglich gelten, wenn eine Mischung aus 1 Gewichtsteil SiH-funktionellem Organosiloxan (B), das 30 Mol-% an unverträglichen Resten, bezogen auf alle Reste im SiH-funktionellem Organosiloxan (B), aufweist und 9 Gewichtsteilen aus alkenylfunktionellem Polyorganosiloxan (A) bei 20 °C mehr als eine Phase bildet.

Gegenstand der Erfindung sind auch zu Siliconbeschichtungen vernetzbare Massen, umfassend die Bestandteile
(A) alkenylfunktionelles Polyorganosiloxan und
(B) SiH-funktionelles Organosiloxan,
wobei das SiH-funktionelle Organosiloxan (B) 0,1 bis 60 Mol-% an mit den Massen unverträglichen Resten aufweist, wobei die Reste mit den Massen dann als unverträglich gelten, wenn eine Mischung aus 1 Gewichtsteil SiH-funktionellem Organosiloxan (B), das 30 Mol-% an unverträglichen Resten, bezogen auf alle Reste im SiH-funktionellem Organosiloxan (B), aufweist und 9 Gewichtsteilen aus alkenylfunktionellem Polyorganosiloxan (A) bei 20 °C mehr als eine Phase bildet.

Die Siliconbeschichtungsmassen sind zu elastomeren Siliconbeschichtungen vernetzbar.

Die Regulierung der Trennkraft erfolgt, indem das Ausmaß der Unverträglichkeit des SiH-funktionellen Organosiloxans (B) mit der Siliconbeschichtungsmasse, die alkenylfunktionelles Polyorganosiloxan (A) umfaßt, reguliert wird. Bei Erhöhung des Anteils an mit der Masse unverträglichen Resten im SiH-funktionellen Organosiloxan (B) wird die Trennkraft erhöht, bei Verringerung erniedrigt. Vorzugsweise wird die Trennkraft erhöht.

Der Übergang zwischen vollständiger Verträglichkeit und Nichtmischbarkeit ist fließend. Daher wird bereits dann ein CRA-Effekt beobachtet, wenn die SiH-haltige Organosiloxanverbindung noch so verträglich mit der Siliconbeschichtungsmasse ist, daß keine Trübung in Erscheinung tritt.

SiH-haltige Organosiloxanverbindungen, die einen sehr hohen Gehalt an unverträglichmachenden Gruppen enthalten, können praktisch gar nicht in die Siliconbeschichtungsmasse eingearbeitet werden, was dann natürlich zu Störungen des Vernetzungsverlaufs, mangelnder Homogenität der Siliconfilmoberfläche, zu Klebrigkeit etc. führen muß. Das Ausmaß der Unverträglichkeit wird bei der vorliegenden Erfindung so gewählt, daß ein weitestgehend homogenes Einmischen in die Siliconbeschichtungsmasse noch möglich ist, obgleich eine gegebenenfalls in Erscheinung tretende Trübung der Mischung diese als ein mikrophasensepariertes System ausweist.

Vorzugsweise weist das SiH-funktionelle Organosiloxan (B) 0,5 bis 30 Mol-%, insbesondere 1 bis 20 Mol-% an mit den Massen unverträglichen Resten auf.

Die Trennkraft der durch Vernetzung der vernetzbaren Massen erhältlichen Siliconbeschichtungen kann durch das SiH-funktionelle Organosiloxan (B) in weiten Grenzen auf stabile, reproduzierbare Art eingestellt werden, ohne daß die übrigen Eigenschaften, wie Vernetzungsgeschwindigkeit, Restklebkraft, Abriebfestigkeit, extrahierbarer Anteil, nachteilig beeinflußt werden; diese Eigenschaften werden sogar noch verbessert. Dem Stand der Technik entsprechend ist man ganz im Gegenteil stets darauf bedacht, eine hohe Verträglichkeit aller Bestandteile zu bewahren, da man Unverträglichkeiten mit schlechter Reproduzierbarkeit, Vulkanisationsstörungen, hohem Gehalt nichteinvernetzter und daher später ausschwitzender Bestandteile, Klebrigkeit und anderen Nachteilen in Verbindung bringt.

Die Trennkraftregulierung mittels vermindert verträglicher SiH-haltiger Organosiloxane hat folgende zusätzliche Vorteile:

Die vielfältigen, diffizilen Anforderungen an das dynamische Trennkraftverhalten von Siliconbeschichtungen, z.B. hohe Trennwerte bei hohen Abzugsgeschwindigkeiten können durch geeignete Auswahl und/oder unterschiedlichen Gehalt der die Verträglichkeit der SiH-haltigen Organosiloxanverbindung herabsetzenden Gruppen wesentlich einfacher erfüllt werden.

Die durch Anwendung des erfindungsgemäßen Verfahrens eingestellten Trennwerte sind stabiler, d.h. unabhängiger von der Lagerzeit der Siliconbeschichtung, als bei Verwendung herkömmlicher Verfahren.

Die modifizierten Vernetzer bewirken zusätzlich eine Verbesserung zahlreicher anwendungstechnisch-relevanter Eigenschaften der Siliconbeschichtungen; diese Vorteile betreffen besonders die additionsvernetzenden Siliconbeschichtungsmassen. Diese weisen geringere Anteile extrahierbarer Bestandteile aufgrund vollständigerer Vernetzung, höhere Abriebfestigkeit und höhere Vernetzungsgeschwindigkeit auf.
Aufgrund der höheren Vernetzungsgeschwindigkeit additionsvernetzender Siliconbeschichtungsmassen lassen sich aus dem erfindungsgemäßen Verfahren weitere Vorteile ableiten: der Gehalt der Siliconbeschichtungsmasse an Platin-Katalysator kann bei gleichbleibender Vernetzungsgeschwindigkeit reduziert werden; dies führt zu Kosteneinsparung. Diese Vorteile treten insbesondere bei Low-Temperature-Curing-(LTC)-Beschichtungsmassen auf.

Die Art der Vernetzung der Siliconbeschichtungsmasse ist unerheblich. Sie kann beispielsweise durch edelmetallkatalysierte Hydrosilylierungsreaktion zwischen dem alkenylfunktionellen Polyorganosiloxan (A) und dem SiH-funktionellen Organosiloxan (B) erfolgen, oder durch z.B. Zinn-katalysierte Kondensationsreaktion zwischen einem Silanol-haltigem Organosiloxan und einem z.B. Alkoxy-funktionellem Silan, oder durch peroxidische Vernetzung, oder durch Strahlungsvernetzung.

Vorzugsweise wirkt das SiH-funktionelle Organosiloxan (B) alsVernetzer. Vorzugsweise werden Massen eingesetzt, die einen Hydrosilylierungskatalysator (C) umfassen.

Vorzugsweise sind die zu Siliconbeschichtungen vernetzbaren Massen additionsvernetzbare Siliconkautschukmassen, welche die Bestandteile
(A) alkenylfunktionelles Polyorganosiloxan,
(B) SiH-funktionelles Organosiloxan und
(C) Hydrosilylierungskatalysator
umfassen.

Das alkenylfunktionelle (A) Polyorganosiloxan ist vorzugsweise zusammengesetzt aus mindestens 90 Mol-% Struktureinheiten der allgemeinen Formel (1)

A₂SiO_{2/2} (1),

und Struktureinheiten der allgemeinen Formel (2)

RₐR¹ _{b}SiO_{(4-a-b)/2} (2),

worin
- **A**: einen Methyl-, Ethyl-, Propyl- oder Butylrest,
- **R**: gleiche oder verschiedene einwertige, gegebenenfalls halogen- oder cyanosubstituierte, gegebenenfalls über eine organische zweiwertige Gruppe an Silicium gebundene C₁-C₁₀-Kohlenwasserstoffreste, die aliphatische Kohlenstoff-Kohlenstoff Mehrfachbindungen enthalten,
- **R**^{**1**}: gleiche oder verschiedene einwertige, gegebenenfalls halogen- oder cyanosubstituierte, über SiC-gebundene C₁-C₁₀-Kohlenwasserstoffreste, die frei sind von aliphatischen Kohlenstoff-Kohlenstoff Mehrfachbindungen,
- **a und b**: die Werte 0, 1, 2, oder 3 bedeuten, mit der Maßgabe, daß mindestens zwei Reste **R**^{**1**} in jedem Molekül vorhanden sind.

Die Vierwertigkeit des Siliciumatoms bedingt, daß **(a+b)** nicht größer als 3 ist.

Die Alkenylgruppen **R** sind einer Anlagerungsreaktion mit einem SiH-funktionellen Vernetzungsmittel zugänglich. Üblicherweise werden Alkenylgruppen mit 2 bis 6 Kohlenstoffatomen, wie Vinyl, Allyl, Methallyl, 1-Propenyl, 5-Hexenyl, Butadienyl, Hexadienyl, Cyclopentenyl, Cyclopentadienyl, Cyclohexenyl, vorzugsweise Vinyl und Allyl, verwendet.

Organische zweiwertige Gruppen, über die die Alkenylgruppen an Silicium der Polymerkette gebunden sein können, bestehen beispielsweise aus 1 bis 20 Oxyalkyleneinheiten.

Die Reste **R** können in jeder Position der Polymerkette, insbesondere an den endständigen Siliciumatomen, gebunden sein.

Beispiele für **R**^{**1**} sind Alkylgruppen, wie Methyl, Ethyl, Propyl, Butyl und Hexyl, Aryl- und Alkarylgruppen, wie Phenyl, Tolyl, Xylyl, Mesityl, Benzyl, β-Phenylethyl und Naphthyl, oder substituierte Gruppen, wie 3,3,3-Trifluorpropyl, o-, p- und m-Chlorphenyl, Bromtolyl und β-Cyanethyl. Bevorzugte Substituenten sind Fluor, Chlor und Brom. **R**^{**1**} weist vorzugsweise 1 bis 6 Kohlenstoffatome auf. Insbesondere bevorzugt sind Methyl und Phenyl.

Das vermindert verträgliche SiH-funktionelle Organosiloxan (B), welches als CRA fungiert, ist vorzugsweise zusammengesetzt aus Struktureinheiten der allgemeinen Formel (3)

A_{c}R² _{d}SiO_{(4-c-d)/2} (3),

und Struktureinheiten der allgemeinen Formel (4)

HₑA_{f}R² _{g}SiO_{(4-e-f-g)/2} (4),

worin
- **R**^{**2**}: von Wasserstoff und **A** verschiedene anorganische oder organische Reste,
- **c und d**: die Werte 0, 1, 2, oder 3,
- **e**: die Werte 1, 2, oder 3,
- **f und g**: die Werte 0, 1 oder 2 bedeuten, und **A** die vorstehenden Bedeutungen aufweist, mit der Maßgabe, daß **(d+g)** 0,1 bis 60 Mol-% von **(c+d+e+f+g)** aufweist, und in jedem Molekül mindestens 2 Struktureinheiten der allgemeinen Formel (4) vorhanden sind.

Die Vierwertigkeit des Siliciumatoms bedingt, daß **(c+d)** und **(e+f+g)** jeweils nicht größer als 3 sind.

**R**^{**2**} kann auch einen halben bi-, drittel tri- oder viertel tetravalenten Rest bedeuten.

Da der Hauptbestandteil der zum Zweck der Abweisung klebriger Stoffe entwickelten Siliconbeschichtungsmassen unpolare Gruppen **A** enthaltendes Organopolysiloxan ist, läßt sich durch Wahl vorzugsweise höherpolarer und/oder aromatischer Gruppen **R**^{**2**} in der SiH-haltigen Organosiloxanverbindung (B) diese Unverträglichkeit mit der Siliconbeschichtungsmasse herbeiführen. Hierfür ist eine außerordentlich große Vielfalt an Gruppen verfügbar, so daß diese nur beispielhaft im folgenden angegeben werden können, wobei jene Gruppen bevorzugt sind, die den Vernetzungsverlauf der Siliconbeschichtungsmasse nicht nachteilig beeinflussen. Des weiteren sind leichtere Gruppen bevorzugt, die den gewichtsmäßigen SiH-Gehalt der vermindert verträglichen SiH-haltigen Organosiloxanverbindung nicht unnötig reduzieren.

Vorzugsweise ist **R**^{**2**} an der Hauptkette und nicht an einer Verzweigungsstelle der SiH-haltigen Organosiloxanverbindung (B) gebunden.

Nicht der in die SiH-haltige Organosiloxanverbindung (B) eingebrachte Anteil **R**^{**2**} selbst bewirkt die Trennkrafterhöhung, sondern der CRA-Effekt durch die hierdurch erzielte verminderte Verträglichkeit der SiH-haltigen Organosiloxanverbindung (B) mit der Siliconbeschichtungsmasse. Aus diesem Grund können bereits bei einem Gehalt der Siliconbeschichtungsmasse von höchstens 10 Gew.-% an dieser SiH-haltigen Verbindung, die wiederum nur höchstens 10 Mol-% höherpolare Reste **R**^{**2**} enthält, beträchtlich höhere Trennkraftwerte eingestellt werden. Würde man die entsprechende Menge dieser Reste **R**^{**2**} nicht in die SiH-haltige Organosiloxanverbindung, sondern in das als Hauptbestandteil fungierende Organopolysiloxan einbringen, würde man keine oder eine nur marginale Trennkrafterhöhung feststellen.

Vorzugsweise enthält die Siliconbeschichtungsmasse 0,5 bis 20 Gew.-%, insbesondere 1 bis 10 Gew.-% an Organosiloxanverbindung (B).

**R**^{**2**} kann ein von **A** und Wasserstoff verschiedener, monovalenter Rest sein, der vorzugsweise, jedoch nicht notwendigerweise, frei von aliphatischen Doppelbindungen ist. Repräsentative Beispiele für **R**^{**2**} sind nichtsubstituierte oder halogensubstituierte Kohlenwasserstoffreste mit bis zu 20 C-Atomen, beispielsweise - Alkylreste, wie n-Pentyl, iso-Pentyl, neo-Pentyl und tert.-Pentyl und Dodecyl,
- Cycloalkylreste, wie Cyclopentyl, Cyclohexyl, Methylcyclohexyl, Ethylcyclohexyl, Cycloheptyl und Norbornylreste,
- Alkenylreste, wie Vinyl, Allyl, 5-Hexenyl, Cyclopentenyl, 4-Vinylcyclohexyl und 3-Norbornenyl,
- Arylreste, wie Phenyl, Naphthyl, Biphenyl, Anthryl und Phenanthryl,
- Alkarylreste, wie Benzyl, Phenylethyl und Phenylpropyl,
- Alkylarylreste, wie p-Tolyl, p-Xylyl,
- Alkenylarylreste, wie Vinylphenyl,
- Aralkenylreste, wie Styryl,
- halogensubstituierte Kohlenwasserstoffreste, wie Chlormethyl, 3-Chlorpropyl, 3-Brompropyl, β-Chlorethyl, 3,3,3-Trifluorpropyl, 2-Fluorethyl, 1,1-Dihydroperfluordodecyl, Trifluortolyl, Chlorphenyl, Dichlorphenyl und Tetrachlorphenyl.

**R**^{**2**} kann des weiteren ein Heteroatome, insbesondere O, S, N und P, enthaltender monovalenter Rest sein, mit bis zu 20 C-Atomen, wie 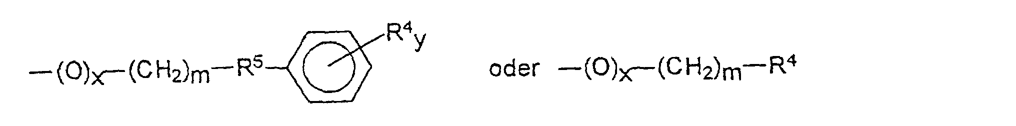 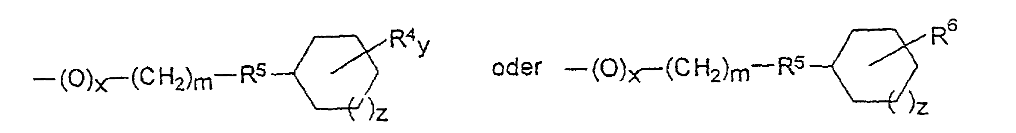 wobei der bivalente Rest **R**^{**5**} beispielsweise
-O-, -C(O)-, -C(O)O-, -OC(O)-, -OC(O)O-, -NH-, -NR³-, -C(O) -NH-, -C(O)-NR³-, -C(O)O-NH-, -C(O)O-NR³-, -NH-C(O)-, -NH-C(O)O-, -NR³-C(O)-, -NR³-C(O)O-, -CH=CH-, -C(CH₃)=CH-, -CH=C(CH₃)-, -C(=CH₂)-, -C(CF₃)₂-, -SO₂-, -SO-, -OSi(CH₃)₂O-, -Ph-, -CH₂-Ph-CH₂-, CH₂-CH₂-Ph-CH₂-CH₂-, -CH₂-CH(CH₃)-Ph-CH(CH₃)-CH₂- sein kann,
die Reste **R**^{**4**} gleich oder verschieden sein können und ausgewählt werden aus der Gruppe der Halogene, Chalkogenide, Alkyl-, Cycloalkyl-, Alkenyl- und Cycloalkenylreste mit bis zu 20 C-Atomen, monovalenten aromatischen Resten mit bis zu 30 C-Atomen, die substituiert oder nichtsubstituiert sein können sowie Heteroatome, wie O, S, N, P, enthaltende aromatische oder nichtaromatische, cyclische oder nichtcyclische Reste mit bis zu 30 C-Atomen.
Beispiele für die Reste **R**^{**4**} sind -F, -Cl, -Br, -I, -CN, -CF₃, -N₂R³, -OH, -OR³, -C(O)OH, -C(O)OR³, -C(O)R³,
-(CH₂)ₘO(CH₂)ₙCH-(O)-CH₂, -C(O)-CH₂-C(O)-CH₃, -(CH₂)ₘ-C(O)-R³, -CN, -C(O)NH₂, -C(O)NHR³, -C(O)NR³₂, -NH₂, -NHR³, -NR³₂, -PR³₂, -N(R³)C(O)NR³₂, -NCO, -SCN, -NO₂,
Die Reste **R**^{**3**} können gleiche oder verschiedene nichtsubstituierte oder halogensubstituierte Kohlenwasserstoffreste mit bis zu 20 C-Atomen bedeuten.
Die Reste **R**^{**6**} können gleich oder verschieden sein und aus der Gruppe der Reste **R**^{**4**} ausgewählt werden zuzüglich =O und =S.
- **x**: bedeutet die Werte 0 oder 1.
- **y**: bedeutet die Werte 1, 2, 3, 4 oder 5.
- **z**: bedeutet die Werte 0, 1, 2, 3, 4 oder 5.
- **m und n**: bedeuten jeweils die Werte 0 oder 1 bis 20, insbesondere 1 bis 5.

Beispiele für Reste **R**^{**2**} sind -(CH₂)ₘ-O-CH₂-CH(OH)-CH₂(OH), -(CH₂)ₘ-(OCH₂CH₂)ₙ-OR³, -(CH₂)ₘ-O-C(O)R³, -(CH₂)ₘ-O-C(O)CH₂C(O)R³-(CH₂)ₘ-O-C(O)-C(H,R³)=CH₂, -(CH₂)ₘ-CH(NH₂)-C(O)OR³, -(CH₂)ₘ-O-Ph-(tert.-Butyl), -(CH₂)ₘ -SO₂-Ph, -(CH₂)ₘ-O-CH₂-CH-(O)-CH₂, -O-(CH₂)ₘ-CF₂-CHF₂, -(CH₂)ₘ-O-C₆F₅, -(CH₂)ₘ-O-C₆H₂Br₃, wobei Ph einen Phenylrest bezeichnet.
**R**^{**2**} kann ein Heteroatome enthaltender, komplexer zusammengesetzter monovalenter Rest sein, wie

-(O)ₓ-(CH₂)ₘ-R⁵-R⁷,

wobei der monovalente Rest **R**^{**7**} beispielsweise einer der folgenden Reste ist, die gegebenenfalls mit **R**^{**4**} und/oder **R**^{**6**} substituiert sein können:

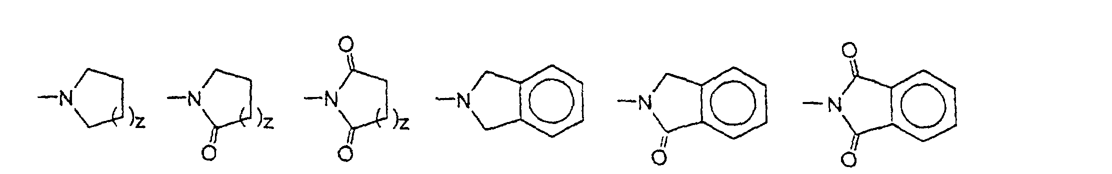

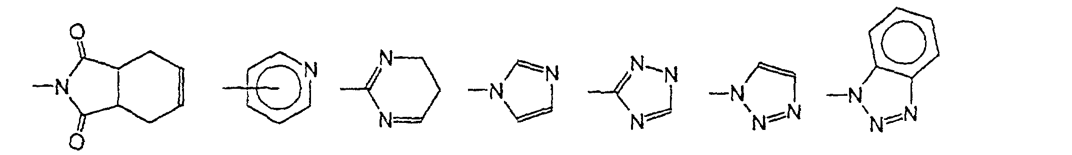

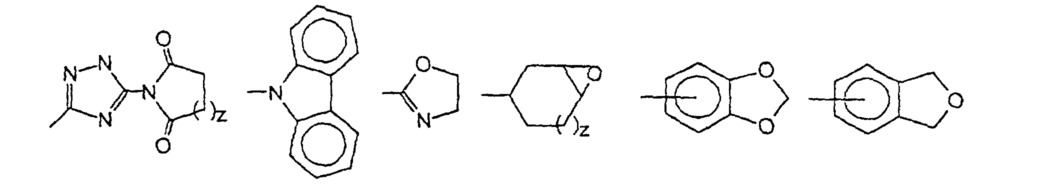

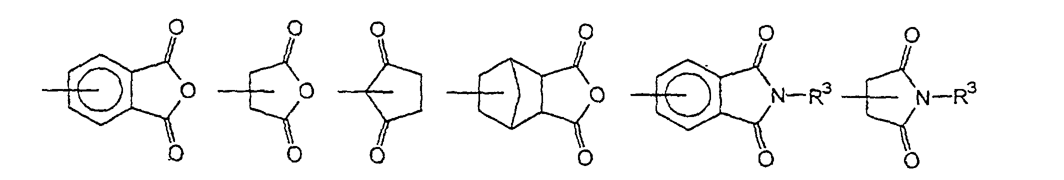

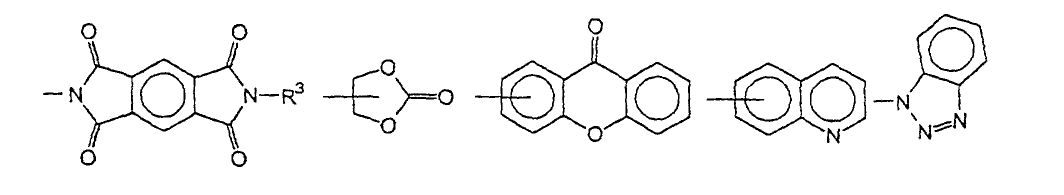

Die bi-, tri- oder tetravalenten Reste **R**^{**2**}**,** bevorzugt werden bivalente Reste, können ebenfalls an sich beliebig wählbare organische Reste sein, wobei jene Reste bevorzugt sind, die den Vernetzungsverlauf der Siliconbeschichtungsmasse nicht nachteilig beeinflussen. Bevorzugt sind über 1 bis maximal 30 C-Atome verfügende Kohlenwasserstoffreste, die nichtsubstituiert oder substituiert sein können sowie Hetercatome, wie O, S, N und P, enthalten können. Beispiele hierfür sind Reste der allgemeinen Formel:

-(O)ₒ-(CH₂)ₚ-R⁵ _{q}-E-R⁵ _{q}-(CH₂)ₚ-(O)ₒ-,

wobei
- **o und p**: die Werte 0 oder 1 und
- **q**: die Werte 0 oder 1 bis 10 bedeuten und
- **E**: einen bivalenten Rest darstellt, welcher vorzugsweise aus den folgenden, gegebenenfalls substituierten Alkylen- bzw. Cycloalkylenresten ausgewählt werden kann:
-CH₂-, -CH₂CH₂-, -CH(CH₃)-CH₂-, -C(=CH₂)-CH₂-, -CH=CH-, -C(CH₃)=CH-, -C(CH₃)=C(CH₃)-, -C(CH₃)₂-, -(CH₂)ₘ-, -(CH₂O)ₘ-, -(CH₂CH₂O)ₘ-, wobei **m** die vorstehenden Bedeutungen aufweist.

**E** kann weiterhin sein: 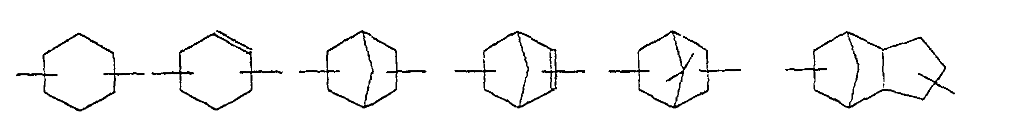 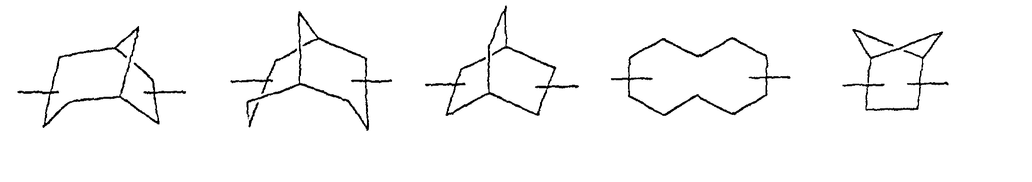 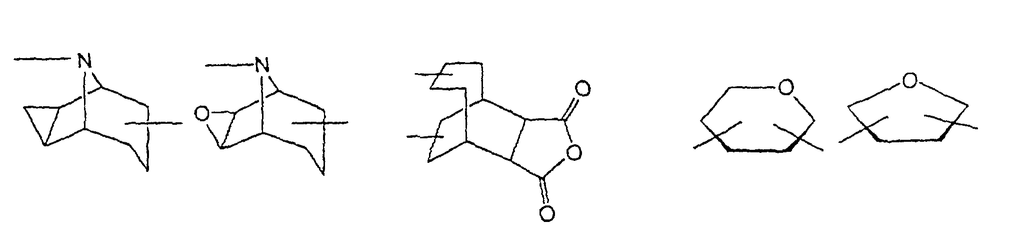 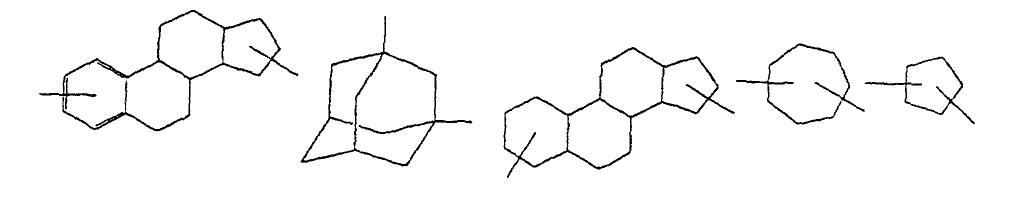 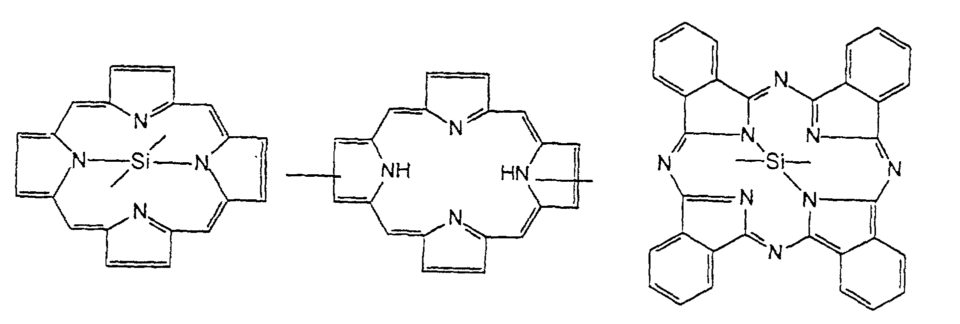 wobei diese Reste gegebenenfalls mit Resten **R**^{**4**} und/oder **R**^{**6**} substituiert sein können; weitere Beispiele für **E** werden in den folgenden Formeln gegeben, wobei diese Arylenreste wiederum mit den Resten **R**^{**4**} und/oder **R**^{**6**} substituiert sein können und Heteroatome enthalten können: 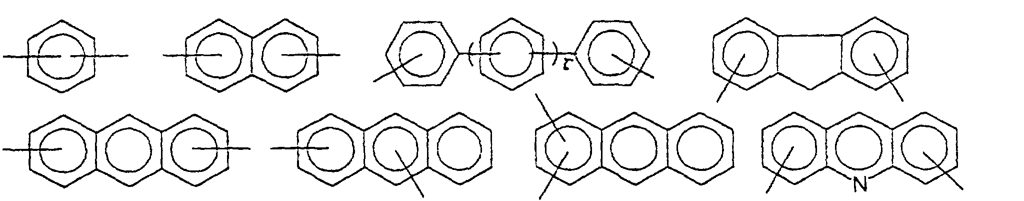 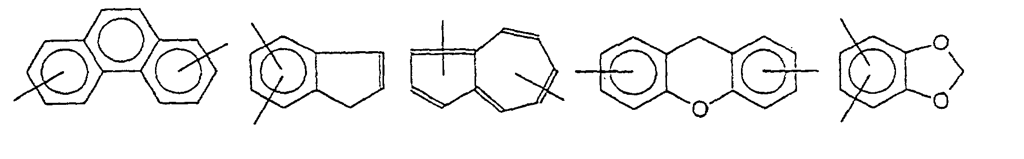 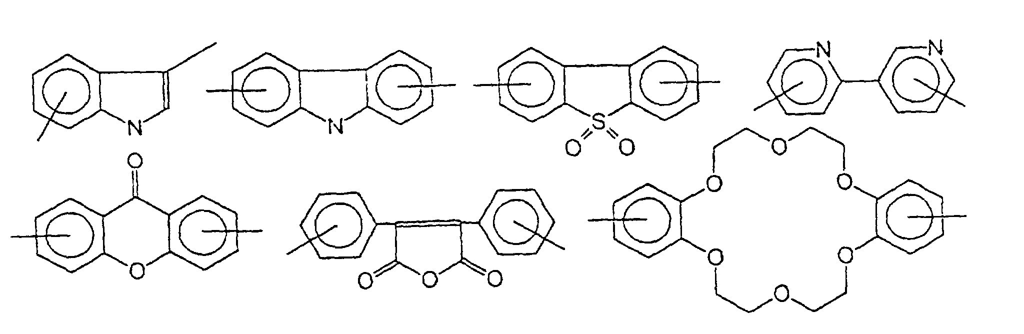 wobei **r** die Werte 0 oder 1 bis 10 bedeutet.

Weitere bevorzugte Reste **R**^{**2**} entsprechen der allgemeinen Formel 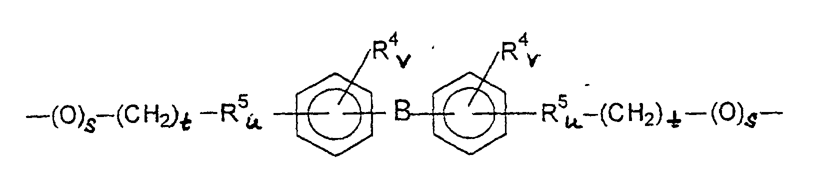 wobei
- **s und u**: die Werte 0 oder 1,
- **v**: die Werte 0, 1, 2, 3 oder 4,
- **t**: die Werte 0 oder 1 bis 10 bedeuten,
- **R**^{**4**} und **R**^{**5**}: die oben dafür angegebenen Bedeutungen haben und
- **B**: eine der folgenden bivalenten Einheiten darstellt:
-O-, -C(O)-, -C(O)O-, -OC(O)O-, -OC(O)-C(O)O-, -C(O)-C(O)-, -CH2-O-C(O)O-, -NH-, -NR³-, -C(O)-NH-, -C(O)-NR₃-, -NH-C(O)O-,-NH-C(O)-NH-, -NR³-C(O)-NR³-, -NR³-C(O)O-, -(CH₂)ₘ-, -CH(OH) --CH(OH)-, -CH=CH-, -C(CH₃)=CH-, -C(=CH₂)-, -C(CH₃)₂-, -C(CH₂CH₃)=C(CH₂CH₃)-, -C(CF₃)₂-, -SO₂-, -SO₂-NH-, -SO₂-NR³-, -SO-, -S-S-, -S-, -OSi(CH₃)₂O-, -O-CH₂-, -O-(CH₂)m-O-, -(CH₂)ₘ-O-(CH₂)ₙ-, -CH₂-OH-(O)-CH-CH₂-, -CH=CH-C(O)-CH₂-C(O)-CH=CH-, -C(O)-CH₂-, -C(O)-CHBr-, -C(O)-C(Ph)₂-, -C(O)-(CH₂)ₘ-C(O)-, -C(O)-CH=CH-,
wobei **m** und **n** die vorstehenden Bedeutungen aufweisen.

Weitere bevorzugte Reste **R**^{**2**} können durch folgende allgemeine Formel dargestellt werden: 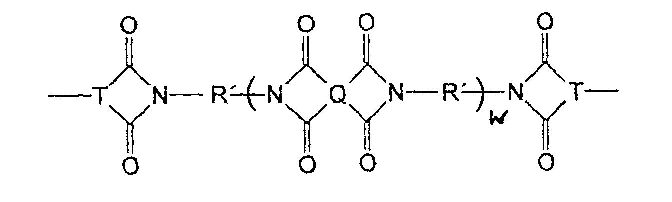 wobei
- **w**: eine ganze Zahl von 0 bis einschließlich 300,
- **T**: ein trivalenter substituierter oder nichtsubstituierter aliphatischer Rest mit 1 bis 18 C-Atomen oder ein trivalenter substituierter oder nichtsubstituierter aromatischer Rest mit 6 bis 18 Kohlenstoffatomen und,
- R': gleich oder verschieden sein kann, ein bivalenter gegebenenfalls halogensubstituierter aromatischer Kohlenwasserstoffrest mit 6 bis 30 Kohlenstoffatomen, Alkylen- oder Cycloalkylenrest mit 2 bis 20 Kohlenstoffatomen oder ein bivalenter Rest der Formel 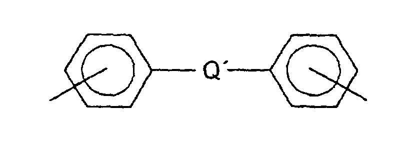
ist, worin
- Q': einen zweibindigen gegebenenfalls substituierten organischen Rest mit 1 bis 20 Kohlenstoffatomen darstellt;
- Q: ist ein tetravalenter aromatischer Rest, ausgewählt aus den folgenden Gruppen: 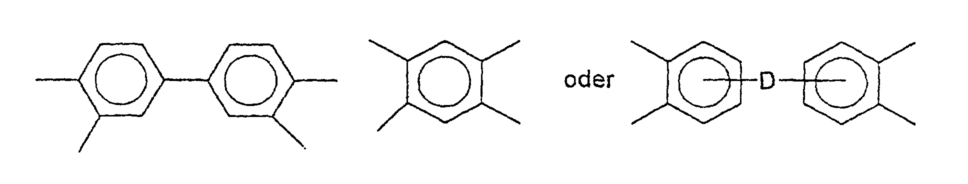
worin D eine der folgenden Gruppen sein kann:
-O-, -S-, -C(O)-, -C(CF₃)₂-, -S(O)₂-, -CₕH₂ₕ-, -C(O)-O-R'-O-C(O)- und -O-R'-O-,
und **h** eine ganze Zahl von 1 bis einschließlich 5 ist.

Weitere besonders bevorzugte bivalente Reste für **R**^{**2**} sind folgende Imidstrukturen der allgemeinen Formel: 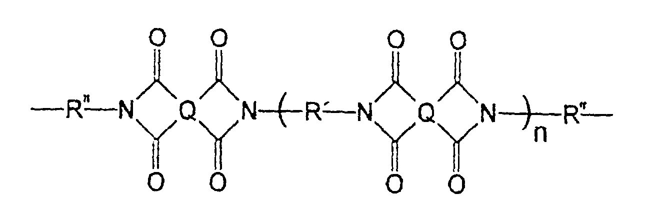 wobei die Reste **Q** und **R'** die oben dafür angegebenen Bedeutungen haben und **R"** einen bivalenten, substituierten oder nichtsubstituierten Kohlenwasserstoffrest, wie einen Alkylen- oder Cycloalkylenrest mit 2 bis 20 C-Atomen, einen aromatischen Rest mit 6 bis 30 C-Atomen oder einen Heteroatome enthaltenden cyclischen oder nichtcyclischen, aromatischen oder nichtaromatischen Rest, darstellt.

Hydrosilylierungskatalysator (C) dient als Katalysator für die als Hydrosilylierung bezeichnete Additionsreaktion zwischen den Alkenylgruppen des Bestandteils (A) und den siliciumgebundenen Wasserstoffatomen des Bestandteils (B). In der Literatur sind zahlreiche geeignete Hydrosilylierungskatalysatoren beschrieben. Prinzipiell können alle dem Stand der Technik entsprechenden und in additionsvernetzenden Siliconbeschichtungsmassen eingesetzten Hydrosilylierungskatalysatoren verwendet werden.

Als Hydrosilylierungskatalysatoren (C) können Metalle und deren Verbindungen, wie Platin, Rhodium, Palladium, Ruthenium und Iridium, vorzugsweise Platin, eingesetzt werden. Die Metalle können gegebenenfalls auf feinteiligen Trägermaterialien, wie Aktivkohle, Metalloxiden, wie Aluminiumoxid oder Siliciumdioxid, fixiert sein.

Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl₂·Olefin)₂ und H(PtCl₃·Olefin) verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Besonders bevorzugt sind Komplexe des Platins mit Vinylsiloxanen, wie sym-Divinyltetramethyldisiloxan.

Der Hydrosilylierungskatalysator (C) kann auch in mikroverkapselter Form eingesetzt werden, wobei der den Katalysator enthaltende und im Polyorganosiloxan unlösliche feinteilige Feststoff beispielsweise ein Thermoplast, wie Polyesterharz oder Siliconharz ist. Der Hydrosilylierungskatalysator (C) kann auch in Form einer Einschlußverbindung, beispielsweise in einem Cyclodextrin, eingesetzt werden.

Die Menge des eingesetzten Hydrosilylierungskatalysators (C) richtet sich nach der gewünschten Vernetzungsgeschwindigkeit sowie ökonomischen Gesichtpunkten. Bei Verwendung gebräuchlicher Platin-Katalysatoren liegt der Gehalt an Hydrosilylierungskatalysator (c) der vernetzbaren Siliconbeschichtungsmasse bezogen auf Platin-Metall vorzugsweise im Bereich von 0.1 bis 500 Gew.-ppm, insbesondere bei 10 bis 100 Gew.-ppm Platin-Metall.

Die Siliconbeschichtungsmasse kann wahlweise als Bestandteil (D) weitere Zusätze zu einem Anteil von bis zu 70 Gew.-%, vorzugsweise von 0,01 bis 40 Gew.-%, enthalten. Diese Zusätze können z.B. Füllstoffe, Harze, Dispergierhilfsmittel, Haftvermittler, Inhibitoren, Pigmente, Farbstoffe, Weichmacher, Hitzestabilisatoren usw. sein.

Hierzu zählen Zusätze, wie hochdisperse Kieselsäure, Quarzmehl, Diatomeenerde, Tone, Kreide, Lithopone, Ruße, Graphit, Metalloxide, -carbonate, -sulfate, Metallstäube, Fasern, Farbstoffe, Pigmente usw.

Enthalten sein können insbesondere Zusätze, die der gezielten Einstellung der Verarbeitungszeit und Vernetzungsgeschwindigkeit der Siliconbeschichtungsmasse dienen. Diese Inhibitoren und Stabilisatoren sind auf dem Gebiet der additionsvernetzenden Massen sehr gut bekannt. Beispiele gebräuchlicher Inhibitoren sind acetylenische Alkohole, wie Ethinylcyclohexanol und 2-Methyl-3-butin-2-ol, Polymethylvinylcyclosiloxane, wie Methylvinylcyclotetrasiloxan, niedermolekulare Siliconöle mit DimethylvinylSiO_{1/2}-Endgruppen und/oder MethylvinylSiO_{2/2}-Einheiten, Trialkylcyanurate, Alkylmaleate, wie Diallylmaleat und Dimethylmaleat, Alkylfumarate, wie Diethylfumarat und Diallylfumarat, organische Hydroperoxide, wie Cumolhydroperoxid, tert.-Butylhydroperoxid und Pinanhydroperoxid, organische Peroxide, organische Sulfoxide, organische Amine und Amide, Phosphine und Phosphite, Nitrile, Diaziridine und Oxime.

Additionsvernetzende Siliconbeschichtungsmassen, die entweder lösemittelfrei oder lösemittelhaltig sein können, oder auch als wäßrige Emulsion vorliegen können, stellen eine bevorzugte Anwendung des erfindungsgemäßen Verfahrens dar. In diesem Fall kann das erfindungsgemäße Verfahren dadurch in Anwendung gebracht werden, indem der ohnehin in der Siliconbeschichtungsmasse enthaltene SiH-Vernetzer so modifiziert wird, daß er eine verminderte Verträglichkeit mit der Siliconbeschichtungsmasse aufweist.

Besonders hohe Trennkraft weisen Siliconbeschichtungsmassen auf, deren Hauptbestandteile vorwiegend aus den leicht zugänglichen, und daher besonders bevorzugten, Dimethylsiloxy-Einheiten aufgebaut sind. Organopolysiloxane, deren organische Reste im wesentlichen Methylreste sind, abgesehen von wenigen funktionellen Gruppen, welche vorzugsweise höchstens 5, insbesondere höchstens 2 Mol-% der Reste in den Komponenten (A) und (B) ausmachen, gehören somit zu den besonders bevorzugten Siliconen; sie können zu elastomeren Siliconüberzügen vernetzt werden, die sich durch ein sehr niedriges Trennkraftniveau auszeichnen.

Siliconbeschichtungsmassen können auf an sich beliebige Substrate, wie Papier, z.B. Pergaminpapier, Clay-gestrichene Papiere, Kraftpapiere, Kartonagen, PE- und PP-beschichtete Papiere; Leder, Textilien, Folien, z.B. LDPE, HDPE, PP, Polyester, PVC; Kunststoffe, Metalle, z.B. Blechgebinde, aufgebracht werden, um eine klebrige Stoffe abweisende Oberfläche zu erzielen, wobei das Ausmaß der Abweisung klebriger Stoffe gezielt eingestellt werden muß. Die Siliconbeschichtungsmassen werden eingesetzt bei der Herstellung von beispielsweise Haftklebebändern, Elektroisolierbändern, Trennpapiere für den Lebensmittelbereich, für Hygieneartikel, für Etiketten etc.

In den nachfolgenden Beispielen sind, falls jeweils nicht anders angegeben,
a) alle Mengenangaben auf das Gewicht bezogen;
b) alle Drücke 0.10 MPa (abs.);
c) alle Temperaturen 20° C;
d) bedeutet Tl. = Teile.

### Beispiele

Die Charakterisierung des CRA-Effektes der vermindert verträglichen SiH-haltigen Organosiloxane erfolgte anhand standardisierter additionsvernetzender Siliconbeschichtungsmassen, denen die nachfolgend beschriebenen SiH-haltigen Organosiloxanverbindungen - die gleichzeitig als CRA und Vernetzer fungieren - in nachfolgend beschriebener Menge zugesetzt wurden. Das Zumischen der SiH-haltigen Organosiloxanverbindung erfolgte bei Raumtemperatur ohne Zuhilfenahme von Lösemitteln.

Die Zusammensetzung der additionsvernetzenden Siliconbeschichtungsmasse entspricht 99.75 Gew.-Tl. eines Dimethylvinylsiloxy-endständigen Polydimethylsiloxanes, das bei 25°C eine Viskosität von 500 mPa.s aufweist, 0.25 Gew.-Tl. Ethinylcyclohexanol (fungiert als Inhibitor), 1.00 Gew.-Tl. eines Platin-Katalysators, welcher 1.0 Gew.-% elementares Platin enthält und eine Lösung eines Platin-sym-divinyltetramethyldisiloxan-Komplexes in einem Dimethylvinylsiloxy-endständigen Polydimethylsiloxan mit einer Viskosität bei 25°C von 1 Pa.s darstellt und eine variable, nachfolgend beschriebene Menge einer SiH-haltigen Organosiloxanverbindung, die als Vernetzer bzw. im Fall der erfindungsgemäßen Beispiele zusätzlich als CRA fungiert.

Nach innigem Vermischen der Bestandteile wurde die vernetzungsfähige Siliconbeschichtungsmasse mit einem Glasstab durch Abziehen auf ein standardisiertes Pergaminpapier (erhältlich bei der Firma Bosso unter der Bezeichnung Buxil® N 925; 65 g/m²) in dünner Schicht aufgebracht. Die Auftragsmenge beträgt 4 g/m². Die Vernetzung erfolgte im Anschluß daran in einem Umlufttrockenschrank bei einer Temperatur von 150°C während einer variablen, nachfolgend angegebenen Zeit. Die siliconisierten Pergaminpapiere wurden dann gemäß des in den FINAT-Testmethoden (beschrieben in: "FINAT Technisches Handbuch"; 4. Auflage; 1995; Herausgeber: FINAT - Internationaler Verein der Hersteller und Verarbeiter von Haftklebe- und Heißklebe-Etiketten auf Papier oder sonstigen Substraten) vorgegebenen Verfahrens hinsichtlich der Trennkraft bei niedriger Abzugsgeschwindigkeit (FINAT Testmethode Nr. 10), der Trennkraft bei hoher Abzugsgeschwindigkeit (FINAT Testmethode Nr. 4) sowie der Restklebkraft (FINAT Testmethode Nr. 11) charakterisiert. Hierbei wurden zwei unterschiedliche handelsübliche, selbstklebende Klebebänder eingesetzt (erhältlich bei der Fa. Beiersdorf unter der Bezeichnung "Tesafilm® Nr.4154", "Tesafilm® Nr.7475" und Tesafilm® Nr.7476; Breite 25 mm).

Die Herstellung der eine verminderte Verträglichkeit mit oben beschriebener additionsvernetzender Siliconbeschichtungsmasse aufweisenden SiH-haltigen Organosiloxanverbindungen ist in nachfolgenden Beispielen beschrieben.

### Beispiel 1:

25 g eines Trimethylsiloxy-endständigen Copolymers bestehend aus Dimethylsiloxy- und Phenylmethylsiloxy-Einheiten in einem molaren Verhältnis von 1 : 1.65 und mit einer Viskosität bei 25°C von 95 mPa.s werden mit einer 20 Gew.-%igen toluolischen PNCl₂-Lösung versetzt, so daß der Gehalt an PNCl₂ 150 Gew.-ppm beträgt, und auf 70°C erwärmt. Anschließend werden unter fortwährendem Rühren bei einer Temperatur von 70°C 135 g eines Trimethylsiloxy-endständigen Polymethylhydrogensiloxans, Me₃Si-(-O-SiH(Me))ₙ-O-SiMe₃, das gemäß ²⁹Si-NMR eine mittlere Kettenlänge von n = 53 besitzt, was einem H-Gehalt (Si-gebundener Wasserstoff) von 1.58 Gew.-% entspricht, tropfenweise so zugegeben (während 30 Minuten), daß die Reaktionsmischung klar bleibt. Zwischenzeitlich wird PNCl₂-Lösung nachdosiert, so daß der PNCl₂-Gehalt der Reaktionsmischung ca. 150 Gew.-ppm beträgt. Nach Zugabe des Polymethylhydrogensiloxans wird 5 Minuten nachäquilibriert und anschließend auf Raumtemperatur abgekühlt. Die Mischung wird in 200 ml Methylenchlorid gelöst und der Äquilibrierungskatalysator mit 1 ml 25 %iger Ammoniaklösung desaktiviert und die gesamte Lösung über trockenem Natriumsulfat sorgfältig getrocknet. Anschließend wird das Methylenchlorid unter leichtem Vakuum abgezogen; man erhält ein trübes Öl, das über Nacht stehengelassen wird und am darauffolgenden Tag über einer Drucknutsche filtriert wird; man erhält ein klares, farbloses Copolymer, dessen H-Gehalt (Si-gebundener Wasserstoff) naßchemisch zu 1.27 Gew.-% bestimmt wurde. 10 g des Reaktionsproduktes sind in 100 g eines Dimethylvinylsiloxy-endständigen Polydimethylsiloxans, das bei 25°C eine Viskosität von 500 mPa.s aufweist, homogen mischbar, ohne daß bei der Vermischung beider Komponenten eine Trübung erkennbar ist.

### Beispiel 2:

Herstellung wie in Beispiel 1 beschrieben, jedoch werden 35 g des phenylhaltigen Copolymers mit 125 g Polymethylhydrogensiloxan äquilibriert. Der H-Gehalt des Reaktionsproduktes wurde naßchemisch zu 1.18 Gew.-% bestimmt. Das Reaktionsprodukt ist mit einem Dimethylvinylsiloxy-endständigem Polydimethylsiloxan, das bei 25°C eine Viskosität von 500 mPa.s aufweist, homogen mischbar, wobei eine sehr schwache milchigweiße Trübung eine verminderte Verträglichkeit der Komponenten zu erkennen gibt.

### Beispiel 3:

Herstellung wie in Beispiel 1 beschrieben, jedoch werden 45 g des phenylhaltigen Copolymers mit 115 g Polymethylhydrogensiloxan äquilibriert. Der H-Gehalt des Reaktionsproduktes wurde naßchemisch zu 1.05 Gew.-% bestimmt. Das Reaktionsprodukt ist mit einem Dimethylvinylsiloxy-endständigen Polydimethylsiloxan, das bei 25°C eine Viskosität von 500 mPa.s aufweist, homogen mischbar, wobei eine beim Vermischen beider Komponenten auftretende schwache milchigweiße Trübung eine verminderte Verträglich der beiden Komponenten zu erkennen gibt.

### Beispiel 4:

Herstellung wie in Beispiel 1 beschrieben, jedoch werden 55 g des phenylhaltigen Copolymers mit 105 g Polymethylhydrogensiloxan äquilibriert. Der H-Gehalt des Reaktionsproduktes wurde naßchemisch zu 0.98 Gew.-% bestimmt. Das Reaktionsprodukt ist mit einem Dimethylvinylsiloxy-endständigen Polydimethylsiloxan, das bei 25°C eine Viskosität von 500 mPa.s aufweist, homogen mischbar, wobei jedoch bei der Vermischung beider Komponenten eine deutlich milchigweiße Trübung beobachtet wird, was auf eine mikrophasenseparierte Verteilung des SiH-haltigen Copolymers in dem Polydimethylsiloxan hindeutet.

### Beispiel 5 (nichterfindungsgemäßes Vergleichsbeispiel) :

Als SiH-haltige Vernetzerkomponente wird ein Trimethylsiloxyendständiges Polymethylhydrogensiloxan,
Me₃Si-(-O-SiH(Me))ₙ-O-SiMe₃, eingesetzt, das gemäß ²⁹Si-NMR eine mittlere Kettenlänge von n = 53 besitzt, was einem H-Gehalt (Si-gebundener Wasserstoff) von 1.58 Gew.-% entspricht. Dieses Polymethylhydrogensiloxan ist vollkommen homogen in der Siliconbeschichtungsmasse löslich, ohne daß eine Trübung erkennbar ist.

**Tabelle 1:**

| Dynamisches Trennkraftverhalten gegenüber Tesafilm® Nr. 7475; Vernetzung: 5 Sekunden bei 150°C | | | | | | | |
|---|---|---|---|---|---|---|---|
| SiH-Verb. | Menge [Gew.-Tl.] | TK 0.3 m/min [N/m] | TK 10 m/min [N/m] | TK 50 m/min [N/m] | TK 100 m/min [N/m] | TK 200 m/min [N/m] | TK 300 m/min [N/m] |
| Beispiel 5 | 2.50 | 4.3 | 9.2 | 21.4 | 24.7 | 26.5 | 29.6 |
| | 4.00 | 7.3 | 12.4 | 32.0 | 41.2 | 41.9 | 45.3 |
| | 6.00 | 10.9 | 20.5 | 39.8 | 45.1 | 42.4 | 49.6 |
| Beispiel 1 | 4.98 | 13.1 | 32.6 | 68.2 | 71.7 | 76.2 | 73.4 |
| | 7.46 | 21.6 | 39.1 | 80.2 | 89.2 | 95.5 | 94.7 |
| Beispiel 2 | 5.36 | 15.0 | 40.5 | 71.6 | 80.4 | 81.3 | 78.5 |
| | 8.03 | 21.1 | 52.5 | 84.5 | 93.9 | 102.8 | 107.1 |
| Beispiel 3 | 6.02 | 16.1 | 40.1 | 73.4 | 82.7 | 85.1 | 81.1 |
| | 9.03 | 29.9 | 55.4 | 86.7 | 92.5 | 104.5 | 118.3 |
| Beispiel 4 | 6.45 | 17.2 | 44.4 | 77.0 | 84.7 | 83.0 | 82.7 |
| | 9.67 | 34.3 | 66.9 | 101.8 | 118.9 | 129.3 | 121.9 |

**Tabelle 2:**

| Dynamisches Trennkraftverhalten gegenüber Tesafilm® Nr. 4154; Vernetzung: 5 Sekunden bei 150°C | | | | | | | |
|---|---|---|---|---|---|---|---|
| SiH-Verb. | Menge [Gew.-Tl.] | TK 0.3 m/min [N/m] | TK 10 m/min [N/m] | TK 50 m/min [N/m] | TK 100 m/min [N/m] | TK 200 m/min [N/m] | TK 300 m/min [N/m] |
| Beispiel 5 | 2.50 | 4.8 | 6.0 | 9.2 | 12.6 | 21.1 | 24.5 |
| | 4.00 | 8.0 | 10.1 | 14.6 | 19.8 | 27.8 | 28.5 |
| | 6.00 | 9.7 | 18.2 | 25.1 | 28.9 | 31.5 | 30.9 |
| Beispiel 1 | 4.98 | 9.4 | 16.4 | 22.6 | 31.3 | 39.6 | 42.7 |
| | 7.46 | 16.8 | 35.6 | 33.6 | 35.2 | 45.5 | 48.9 |
| Beispiel 2 | 5.36 | 9.7 | 16.5 | 23.8 | 36.8 | 41.4 | 47.4 |
| | 8.03 | 18.8 | 35.8 | 33.4 | 43.6 | 54.9 | 57.4 |
| Beispiel 3 | 6.02 | 11.3 | 22.2 | 26.8 | 35.8 | 47.8 | 48.5 |
| | 9.03 | 20.7 | 39.1 | 43.4 | 46.4 | 57.5 | 59.2 |
| Beispiel 4 | 6.45 | 11.2 | 24.7 | 29.3 | 39.0 | 47.0 | 48.7 |
| | 9.67 | 24.6 | 51.8 | 46.8 | 48.2 | 57.6 | 65.8 |

Die unter Verwendung der SiH-haltigen Organosiloxanverbindungen (Beispiel 1 bis Beispiel 5) hergestellten Papiersiliconbeschichtungen wurden hinsichtlich ihres dynamischen Trennkraftverhaltens gegenüber zwei unterschiedlichen Klebebändern charakterisiert; die Ergebnisse sind in den Tabellen 1 und 2 aufgelistet. Zunächst kann festgestellt werden, daß die unter Verwendung der in den Beispielen 1 bis 5 beschriebenen SiH-Vernetzer formulierten Massen trockene, nichtklebrige Siliconfilme auf dem Pergaminpapier ergeben, wobei die Vernetzung in allen Fällen während 5 Sekunden in einem Umlufttrockenschrank bei einer Temperatur von 150°C erfolgte. Die siliconisierten Pergaminpapiere wurden entweder mit einem Tesafilm® Nr. 7475 oder Tesafilm® Nr. 4154 beklebt und nach Alterung der Laminate von 20 Stunden bei 70°C und einer Belastung von 70 g/cm² hinsichtlich ihres dynamischen Trennkraftverhaltens entsprechend der FINAT-Testmethoden charakterisiert.

Die nach der FINAT-Testmethode Nr.11 bestimmte Restklebkraft der in den Tabellen 1 und 2 beschriebenen Siliconbeschichtungen lag in allen Fällen bei praktisch 100 %, wodurch das Vorhandensein nichteinvernetzter, migrierender, ölartiger Siliconbestandteile ausgeschlossen werden kann; dies wird auch durch die ausnahmslos sehr guten Ergebnisse beim Rub-off-, Migrations- und Anfärbe-Test (vgl. Merkblatt "Dehesive® Testmethoden" der Wacker Chemie GmbH; Ausgabe 1991) bestätigt.

Die in Tabelle 1 und 2 für die nicht erfindungsgemäße Einstellung des Trennkraftniveaus mittels unterschiedlicher Mengen an Polymethylhydrogensiloxan (Beispiel 5) angegebenen Trennkraft-werte bei unterschiedlicher Abzugsgeschwindigkeit verdeutlichen, daß die Trennkraft eine gewisse Abhängigkeit von der SiH-Einsatzmenge zeigt. Insbesondere kann eine mäßige Trennkrafterhöhung gegenüber dem acrylathaltigen Kleber des Tesafilms® Nr. 7475 durch bloße Erhöhung der SiH-Vernetzermenge erzielt werden, während die Trennkraft der Siliconbeschichtungen gegenüber dem Tesafilm® Nr. 4154 weniger empfindlich auf die SiH-Einsatzmenge reagiert. Wie aus Tabelle 1 und 2 ersichtlich ist, kann mittels der vermindert verträglichen, phenylhaltigen SiH-haltigen Copolymere, also auf die erfindungsgemäße Art, die Trennkraft wesentlich stärker angehoben werden; durchschnittlich auf das Doppelte bis Dreifache im Vergleich zum vollkommen löslichen Polymethylhydrogensiloxan. Dabei wurde die Einsatzmenge für die vermindert verträglichen SiH-Vernetzer so gewählt, daß das molare
SiH/SiCH=CH₂-Verhältnis jeweils demjenigen der 4.00 Gew.-Tl. bzw. 6.00 Gew.-Tl. Polymethylhydrogensiloxan enthaltenden Siliconbeschichtungsmasse entspricht, so daß in Tabelle 1 und 2 die unabhängig vom SiH-Gehalt durch die verminderte Verträglichkeit des SiH-Vernetzers bewirkte Trennkrafterhöhung unmittelbar offenbart wird. Des weiteren wird ersichtlich, daß mit abnehmender Verträglichkeit des SiH-Vernetzers bei unverändertem SiH/SiCH=CH₂ -Verhältnis eine deutliche Zunahme der Trennkraftwerte zu verzeichnen ist. Damit ist gezeigt, daß der CRA-Effekt der vermindertverträglichen SiH-Vernetzer zum einen durch Erhöhung der Einsatzmenge und zum anderen durch Verminderung der Verträglichkeit erzielt werden kann.

### Beispiel 6:

5.0 g Poly[(dimethylsiloxy)-bis-(dimethylsiloxy)-ethylnorbornan] werden in 100 g Toluol gelöst und auf 80°C erhitzt. Nach Zugabe von 0.27 g einer 10 Gew.-%igen toluolischen PNCl₂-Lösung werden langsam 8.0 g Polymethylhydrogensiloxan (kommerziell erhältlich bei Aldrich GmbH) und 4.0 g 1,3,5,7-Tetramethylcyclotetrasiloxan (kommerziell erhältlich bei ABCR GmbH) zugetropft. Nach dem Entfernen leicht flüchtiger Bestandteile wird eine farblose Flüssigkeit erhalten, die entsprechend ihrer ¹H-NMR-, ²⁹Si-NMR- und IR-Spektren folgende mittlere Zusammensetzung aufweist, was einem H-Gehalt (Si-gebundener Wasserstoff) von 0.984 Gew.-% entspricht. Der Gehalt an den eine verminderte Verträglichkeit verursachenden Norbornylen-haltigen Struktureinheiten ist so bemessen, daß dieser SiH-Vernetzer in einem Dimethylvinylsiloxy-endständigen Polydimethylsiloxan, welches bei 25°C eine Viskosität von 500 mPa.s aufweist, in jedem Verhältnis homogen mischbar ist, ohne daß eine Trübung beobachtet wird:

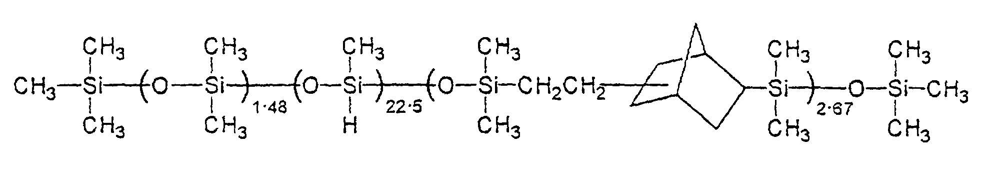

### Beispiel 7:

20.0 g Dimethylsiloxan-Silphenylen Copolymer und 210 g Toluol (getrocknet) werden auf 80°C erhitzt. Nach der Zugabe von 0.35 g einer 10 Gew.-%igen toluolischen PNCl₂-Lösung werden innerhalb von 30 Minuten 25.0 g Polymethylhydrogensiloxan (von Aldrich) und 15.0 g Tetramethylcyclotetrasiloxan zugetropft. Die Reaktionsmischung wird 1 Stunde bei 80°C gerührt und nach der Zugabe von nochmals 0.35 g einer 10 Gew.-%igen toluolischen PNCl₂-Lösung bei einer Temperatur von 100°C nochmals eine Stunde gerührt. Nach dem Abkühlen werden 2.0 g Hexamethyldisilazan (von Aldrich) zugegeben und 30 Minuten gerührt. Nach Filtration werden die niedrig siedenden Bestandteile im Vakuum entfernt. Man erhält ein klares, farbloses Öl, welches gemäß der ¹H-NMR-, ²⁹Si-NMR- und IR-Spektren folgende mittlere Zusammensetzung aufweist, was einem H-gehalt (Si-gebundener Wasserstoff) von 1.02 Gew.-% entspricht. Der Gehalt an den eine verminderte Verträglichkeit verursachenden Phenylen-Einheiten ist so bemessen, daß dieser SiH-Vernetzer in einem Dimethylvinylsiloxy-endständigen Polydimethylsiloxan, welches bei 25°C eine Viskosität von 500 mPa.s aufweist, in jedem Verhältnis homogen mischbar ist, ohne daß eine Trübung in Erscheinung tritt:

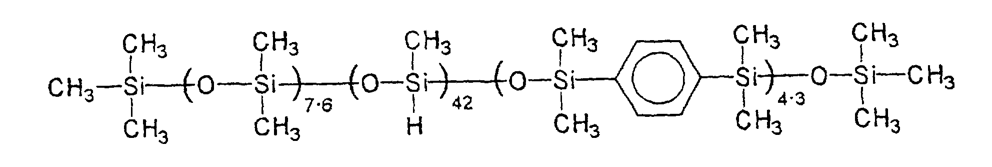

### Beispiel 8:

Die Herstellung erfolgt analog zu Beispiel 7, mit dem Unterschied, daß die Reaktionszeit auf 2 Stunden bei 100°C erhöht wurde; Man erhält ein klares, farbloses Öl, welches gemäß der ¹H-NMR-, ²⁹Si-NMR- und IR-Spektren folgende mittlere Zusammensetzung aufweist, was einem H-gehalt (Si-gebundener Wasserstoff) von 0.91 Gew.-% entspricht. Der Gehalt an den eine verminderte Verträglichkeit verursachenden Phenylen-Einheiten ist so bemessen, daß dieser SiH-Vernetzer in einem Dimethylvinylsiloxy-endständigen Polydimethylsiloxan, welches bei 25°C eine Viskosität von 500 mPa.s aufweist, zwar homogen eingemischt werden kann, bei der Vermischung jedoch eine milchigweiße Trübung auftritt:

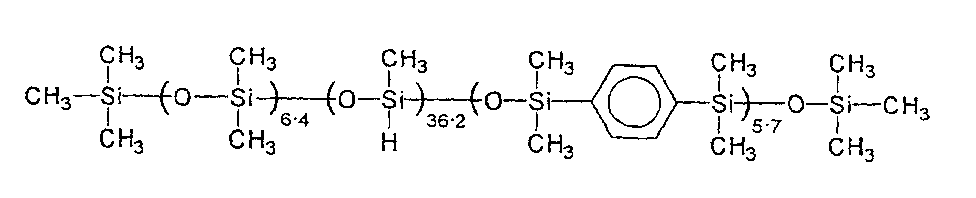

### Beispiel 9:

10.0 g 2,2-Bis(p-allyloxyphenyl)propan und 30.0 g Polymethylhydrogensiloxan (von Aldrich) werden gemischt und auf 80°C erhitzt. Nach Zugabe von 0.10 g einer 10 Gew.-%igen toluolischen PNCl₂-Lösung zur Reaktionsmischung wird diese 2 Stunden bei 100°C gerührt. Anschließend wird der Äquilibrierungskatalysator desaktiviert und das Produktgemisch von niedrig siedenden Bestandteilen im Vakuum befreit. Gemäß der ¹H-NMR-, ²⁹Si-NMR- und IR-Spektren weist das Produkt folgende mittlere Zusammensetzung auf, was einem H-Gehalt (Si-gebundener Wasserstoff) von 1.13 Gew.-% entspricht. Der Gehalt an den eine verminderte Verträglichkeit verursachenden Bisphenol-A-artigen Struktureinheiten ist so bemessen, daß dieser SiH-Vernetzer in einem Dimethylvinylsiloxy-endständigen Polydimethylsiloxan, welches bei 25°C eine Viskosität von 500 mPa.s aufweist, zwar homogen eingemischt werden kann, bei der Vermischung jedoch eine milchigweiße Trübung auftritt:

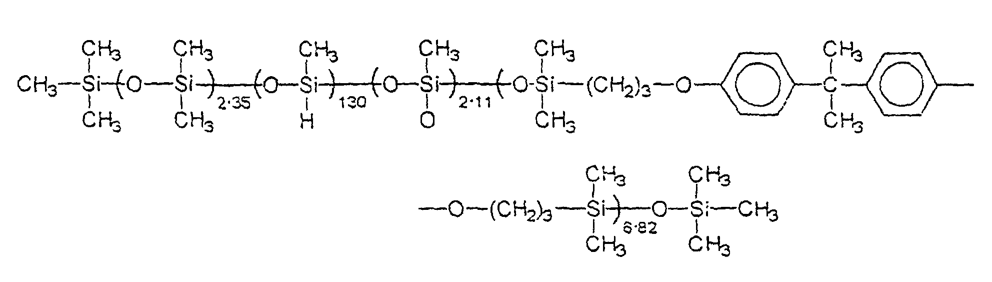

### Beispiel 10:

In einem mit Rückflußkühler, Rührer und Innenthermometer versehenen Rundkolben werden 9.54 g
Allyl-4-tert.-butylphenylether und 60 g Polymethylhydrogensiloxan (von Aldrich) gegeben. Zu diesem Gemisch werden bei 80°C unter Rühren 1.2 ml einer Lösung eines Platin-sym-Divinyl-tetramethylsiloxan-Komplexes (Lösung in Cyclohexan mit 1 Gew.-% Pt berechnet als Element) zugegeben. Nach 2 stündigem Erhitzen bei 90°C wird die Reaktionslösung mit Aktivkohle versetzt und filtriert. Nach dem Entfernen der flüchtigen Anteile bei 60°C unter Vakuum (2 mbar) werden 57 g Poly[(methylhydrogensilaxan)(methyl tert.-butylphenylpropylethersiloxan)] erhalten, welches gemäß der ¹H-NMR-, ²⁹Si-NMR- und IR-Spektren folgende mittlere Zusammensetzung aufweist, was einem H-Gehalt (Si-gebundener Wasserstoff) von 1.33 Gew.-% entspricht. Der Gehalt an den eine verminderte Verträglichkeit verursachenden tert.-Butylphenoxypropyl-Seitengruppen ist so bemessen, daß dieser SiH-Vernetzer in einem Dimethylvinylsiloxy-endständigen Polydimethylsiloxan, welches bei 25°C eine Viskosität von 500 mPa.s aufweist, zwar homogen eingemischt werden kann, bei der Vermischung jedoch eine milchigweiße Trübung auftritt:

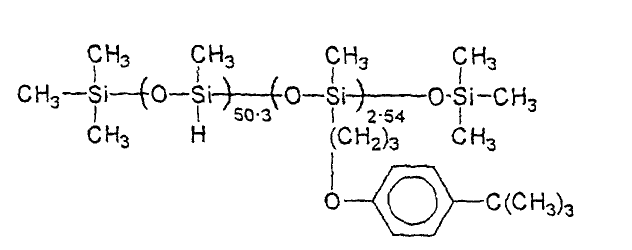

### Beispiel 11:

16.0 g Poly[(p-phenylentetramethylsiloxan)(dimethylsiloxan)] und 32.0 g Polymethylhydrogensiloxan werden gemischt und unter Stickstoffatmosphäre auf 120°C erhitzt. Anschließend werden 0.12 ml einer 10 Gew.-%igen toluolischen PNCl₂-Lösung zugegeben und die Mischung wird 2 Stunden bei 120°C gerührt. Man läßt auf 40°C abkühlen, gibt 1.6 g Hexamethyldisilazan hinzu, läßt 10 Minuten rühren und entfernt flüchtige Anteile im Vakuum (2 mbar) bei 80°C. Nach Filtration werden ca. 40 g eines klaren Öls erhalten, welches gemäß der ¹H-NMR-, ²⁹Si-NMR- und IR-Spektren folgende mittlere Zusammensetzung aufweist, was einem H-Gehalt (Si-gebundener Wasserstoff) von 1.02 Gew.-% entspricht. Der Gehalt an den eine verminderte Verträglichkeit verursachenden Phenylen-Einheiten ist so bemessen, daß dieser SiH-Vernetzer in einem Dimethylvinylsiloxy-endständigen Polydimethylsiloxan, welches bei 25°C eine Viskosität von 500 mPa.s aufweist, zwar homogen eingemischt werden kann, bei der Vermischung jedoch eine milchigweiße Trübung auftritt:

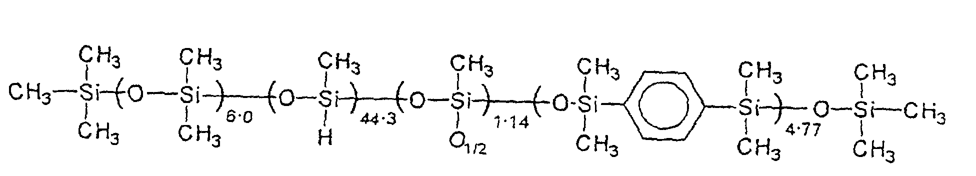

### Beispiel 12:

Unter Schutzgas werden 5.0 g Poly[(dimethylsiloxy)-bis-(dimethylsiloxy)-ethylnorbornan] und 30.0 g Polymethylhydrogensiloxan auf 80°C erhitzt. Nach der Zugabe von 0.1 ml einer 10 Gew.-%igen toluolischen PNCl₂-Lösung wird eine Stunde bei 100°C und anschließend 15 Minuten bei 120°C gerührt. Man läßt die Mischung auf Raumtemperatur abkühlen, gibt 0.5 ml Hexamethyldisilazan hinzu, rührt weitere 15 Minuten und entfernt flüchtige Anteile im Vakuum (1 mbar) bei 70°C. Man erhält ca. 28 g eines leicht trüben Öls, welches gemäß der ¹H-NMR-, ²⁹Si-NMR- und IR-Spektren folgende mittlere Zusammensetzung aufweist, was einem H-Gehalt (Si-gebundener Wasserstoff) von 1.40 Gew.-% entspricht.
Der Gehalt an den eine verminderte Verträglichkeit verursachenden Norbornylen-haltigen Struktureinheiten ist so bemessen, daß dieser SiH-Vernetzer in einem Dimethylvinylsiloxy-endständigen Polydimethylsiloxan, welches bei 25°C eine Viskosität von 500 mPa.s aufweist, in jedem Verhältnis homogen mischbar ist, ohne daß eine Trübung beobachtet wird:

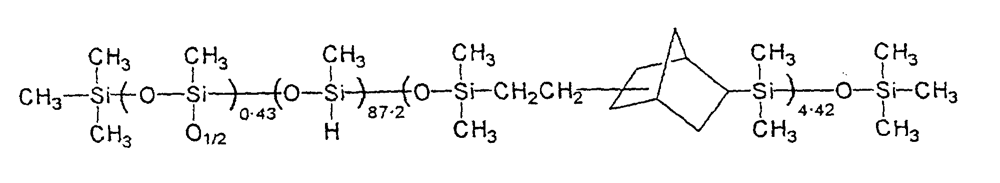

### Beispiel 13:

10.0 g eines Copolymers, bestehend aus Dimethylsiloxy- und Imid-haltigen Struktureinheiten gemäß folgender mittlerer Zusammensetzung,

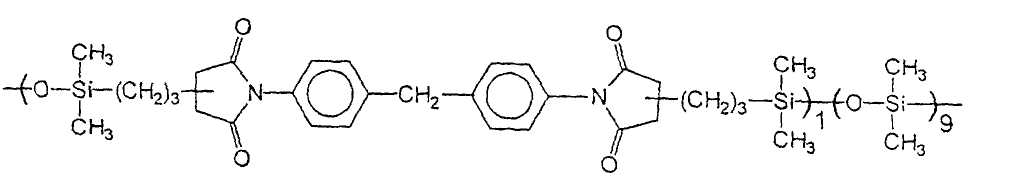

150.0 g Toluol, 75.0 g Polymethylhydrogensiloxan und 1.8 g Toluol-4-sulfonsäure werden gemischt und bei 100°C 3 Stunden lang gerührt. Nach dem Abkühlen auf Raumtemperatur wird über Filterhilfe filtriert und flüchtige Anteile werden im Vakuum (3 mbar) bei 60°C entfernt. Man erhält ca. 61 g Reaktionsprodukt, welches gemäß der ¹H-NMR-, ²⁹Si-NMR- und IR-Spektren die nachfolgend angegebene mittlere Zusammensetzung aufweist, was einem H-Gehalt (Si-gebundener Wasserstoff) von 1.32 Gew.-% entspricht.
Der Gehalt an den eine verminderte Verträglichkeit verursachenden Imid-artigen Struktureinheiten ist so bemessen, daß dieser SiH-Vernetzer in einem Dimethylvinylsiloxy-endständigen Polydimethylsiloxan, welches bei 25°C eine Viskosität von 500 mPa.s aufweist, zwar homogen eingemischt werden kann, bei der Vermischung jedoch eine milchigweiße Trübung auftritt:

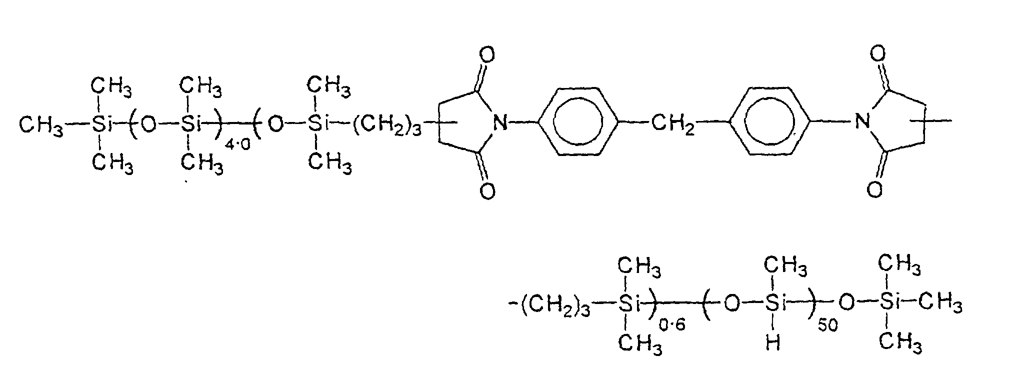

Die Ergebnisse der unter Verwendung der in den Beispielen 5 bis 13 beschriebenen SiH-haltigen Vernetzer hergestellten Siliconbeschichtungen sind in Tabelle 3 und 4 zusammengefaßt (dynamisches Trennkraftverhalten); Beispiel 5 dient als nicht erfindungsgemäßes Vergleichsbeispiel.

**Tabelle 3:**

| Dynamisches Trennkraftverhalten gegenüber Tesafilm® Nr.7475; Vernetzung: 5 Sekunden bei 150°C | | | | | | | |
|---|---|---|---|---|---|---|---|
| SiH-Verb. | Menge [Gew.-Tl.] | TK 0.3 m/min [N/m] | TK 10 m/min [N/m] | TK 50 m/min [N/m] | TK 100 m/min [N/m] | TK 200 m/min [N/m] | TK 300 m/min [N/m] |
| Beispiel 5 | 2.50 | 4.8 | 6.0 | 9.2 | 12.6 | 21.1 | 24.5 |
| | 4.00 | 8.0 | 10.1 | 14.6 | 19.8 | 27.8 | 28.5 |
| | 6.00 | 9.7 | 18.2 | 25.1 | 28.9 | 31.5 | 30.9 |
| Beispiel 6 | 9.63 (6.00) | 31.8 | 100.2 | 98.6 | 102.7 | 105.2 | 111.5 |
| Beispiel 7 | 6.20 (4.00) | 11.0 | 25.3 | 45.7 | 58.1 | 54.8 | 57.3 |
| | 9.29 (6.00) | 25.1 | 125.2 | 110.3 | 99.4 | 95.6 | 83.7 |
| Beispiel 8 | 6.95 (4.00) | 17.9 | 43.3 | 54.7 | 61.5 | 63.7 | 57.1 |
| | 10.42 (6.00) | 35.0 | 125.8 | 101.2 | 100.0 | 99.1 | 104.0 |
| Beispiel 9 | 3.50 (2.50) | 8.6 | 14.4 | 20.0 | 25.3 | 28.5 | 30.8 |
| | 5.59 (4.00) | 10.4 | 17.8 | 25.3 | 30.8 | 38.9 | 38.5 |
| Beispiel 10 | 2.97 (2.50) | 6.5 | 13.0 | 17.4 | 20.4 | 25.0 | 26.4 |
| | 5.59 (4.00) | 8.9 | 19.2 | 23.5 | 30.2 | 38.3 | 42.6 |
| Beispiel 11 | 3.87 (2.50) | 6.1 | 7.7 | 15.2 | 22.5 | 27.4 | 28.7 |
| | 6.20 (4.00) | 16.3 | 23.8 | 25.5 | 37.1 | 43.3 | 43.5 |
| Beispiel 12 | 2.82 (2.50) | 5.5 | 10.6 | 20.4 | 21.7 | 24.1 | 26.4 |
| | 4.51 (4.00) | 9.1 | 20.1 | 31.3 | 38.8 | 38.2 | 42.7 |
| Beispiel 13 | 2.99 (2.50) | 4.0 | 7.1 | 13.7 | 21.3 | 26.2 | 28.6 |
| | 4.79 (4.00) | 16.4 | 25.8 | 36.1 | 41.0 | 56.5 | 49.1 |
| | 7.18 (6.00) | 50.2 | 110.2 | 106.3 | 144.3 | Riß | Riß |
| (TK = Trennkraft; die in der zweiten Spalte in Klammern angegebene Menge gibt an, wieviel Gewichtsteile Polymethylhydrogensiloxan zudosiert werden müßten, um die gleiche Menge an Si-gebundenem Wasserstoff in die Siliconbeschichtungsmasse einzubringen; die Angabe "Riß" bedeutet, daß die Trennkraft einen (sehr hohen) Wert erreicht hat, der meßtechnisch aufgrund von Papierriß nicht mehr erfaßt werden konnte) | | | | | | | |

**Tabelle 4:**

| Dynamisches Trennkraftverhalten gegenüber Tesafilm® Nr.4154; Vernetzung: 5 Sekunden bei 150°C | | | | | | | |
|---|---|---|---|---|---|---|---|
| SiH-Verb. | Menge [Gew.-Tl.] | TK 0.3 m/min [N/m] | TK 10 m/min [N/m] | TK 50 m/min [N/m] | TK 100 m/min [N/m] | TK 200 m/min [N/m] | TK 300 m/min [N/m] |
| Beispiel 5 | 2.50 | 4.8 | 6.0 | 9.2 | 12.6 | 21.1 | 24.5 |
| | 4.00 | 8.0 | 10.1 | 14.6 | 19.8 | 27.8 | 28.5 |
| | 6.00 | 9.7 | 18.2 | 25.1 | 28.9 | 31.5 | 30.9 |
| Beispiel 6 | 9.63 (6.00) | 31.8 | 100.2 | 98.6 | 102.7 | 105.2 | 111.5 |
| Beispiel 7 | 6.20 (4.00) | 11.0 | 25.3 | 45.7 | 58.1 | 54.8 | 57.3 |
| | 9.29 (6.00) | 25.1 | 125.2 | 110.3 | 99.4 | 95.6 | 83.7 |
| Beispiel 8 | 6.95 (4.00) | 17.9 | 43.3 | 54.7 | 61.5 | 63.7 | 57.1 |
| | 10.42 (6.00) | 35.0 | 125.8 | 101.2 | 100.0 | 99.1 | 104.0 |
| Beispiel 9 | 3.50 (2.50) | 8.6 | 14.4 | 20.0 | 25.3 | 28.5 | 30.8 |
| | 5.59 (4.00) | 10.4 | 17.8 | 25.3 | 30.8 | 38.9 | 38.5 |
| Beispiel 10 | 2.97 (2.50) | 6.5 | 13.0 | 17.4 | 20.4 | 25.0 | 26.4 |
| | 5.59 (4.00) | 8.9 | 19.2 | 23.5 | 30.2 | 38.3 | 42.6 |
| Beispiel 11 | 3.87 (2.50) | 6.1 | 7.7 | 15.2 | 22.5 | 27.4 | 28.7 |
| | 6.20 (4.00) | 16.3 | 23.8 | 25.5 | 37.1 | 43.3 | 43.5 |
| Beispiel 12 | 2.82 (2.50) | 5.5 | 10.6 | 20.4 | 21.7 | 24.1 | 26.4 |
| | 4.51 (4.00) | 9.1 | 20.1 | 31.3 | 38.8 | 38.2 | 42.7 |
| Beispiel 13 | 2.99 (2.50) | 4.0 | 7.1 | 13.7 | 21.3 | 26.2 | 28.6 |
| | 4.79 (4.00) | 16.4 | 25.8 | 36.1 | 41.0 | 56.5 | 49.1 |
| | 7.18 (6.00) | 50.2 | 110.2 | 106.3 | 144.3 | Riß | Riß |
| (TK = Trennkraft; die in der zweiten Spalte in Klammern angegebene Menge gibt an, wieviel Gewichtsteile Polymethylhydrogensiloxan zudosiert werden müßten, um die gleiche Menge an Si-gebundenem Wasserstoff in die Siliconbeschichtungsmasse einzubringen; die Angabe "Riß" bedeutet, daß die Trennkraft einen (sehr hohen) Wert erreicht hat, der meßtechnisch aufgrund von Papierriß nicht mehr erfaßt werden konnte) | | | | | | | |

Die in Tabelle 3 und 4 angegebenen Resultate belegen, daß die Trennkraft auf die erfindungsgemäße Weise in weiten Grenzen gezielt eingestellt werden kann. Durch relativ kleine Konzentrationsänderungen des eine verminderte Verträglichkeit aufweisenden SiH-Vernetzers kann die Trennkraft höchste Werte erreichen, was sich im Papierriß bei der Laminattrennung äußert. Des weiteren ist ersichtlich, daß je nach Art der die Unverträglichkeit herbeiführenden, im SiH-Vernetzer enthaltenen Gruppen das Ausmaß der Abweisung klebriger Stoffe, und insbesondere das dynamische Trennkraftverhalten, unterschiedlich eingestellt werden kann, wodurch man den in dieser Hinsicht vielfältigen Anforderungsprofilen wesentlich besser gerecht werden kann.
Tabelle 3 und 4 verdeutlichen, daß eine gezielte Trennkraftregelung möglich ist, ohne das den Hauptbestandteil bildende Dimethylvinyl-endständige Polydimethylsiloxan zu modifizieren. Insbesondere kann auf die sonst zur Erzielung derart hoher Trennkraftwerte in hoher Konzentration einzusetzenden Siliconharze gänzlich verzichtet werden.
Die Tests zur Restklebkraft der in Tabelle 3 und 4 aufgelisteten Siliconbeschichtungen ergaben ausnahmslos Werte von praktisch 100 %, was in Verbindung mit den ebenfalls ausgezeichnete Werte ergebenden Rub-off-, Strich- und Migrationstests die innerhalb kürzester Zeit erfolgende vollständige Vernetzung der Siliconbeschichtungsmasse belegt.
In Anbetracht der verminderten Verträglichkeit der erfindungsgemäßen SiH-Vernetzer ist völlig überraschend, festzustellen, daß keine migrierende Bestandteile vorhanden sind und die Vernetzungsgeschwindigkeit nicht nur nicht negativ beeinflußt wird, sondern sogar eine vollständigere und schnellere Vernetzung als bei Verwendung herkömmlicher Vernetzer in Verbindung mit herkömmlichen CRAs, insbesondere Siliconharzen, beobachtet wird. Dies wird nachfolgend anhand eines Vergleichs der Extraktionswerte (d.h. des mittels eines Lösemittels (Toluol) aus dem vernetztem Siliconfilm extrahierbaren prozentualen Gew.-Anteils) mit den nachfolgend beschriebenen nichterfindungsgemäßen, Siliconharz-haltigen Siliconbeschichtungsmassen gezeigt:

### Beispiel 14 (nichterfindungsgemäßes Vergleichsbeispiel):

Die vernetzungsfähige Siliconbeschichtungsmasse wird hergestellt durch inniges Vermischen folgender Bestandteile: 70 Gew.-Tl. Dehesive® 920 (erhältlich bei der Fa. Wacker Chemie GmbH); 4.3 Gew.-Tl. eines Trimethylsiloxy-endständigen Poly[(dimethylsiloxan)(methylhydrogensiloxan)]-Copolymers, welches bei 25°C eine Viskosität von 35 mPa.s aufweist und einen H-Gehalt (Si-gebundener Wasserstoff) von 1.15 Gew.-% besitzt; 30 Gew.-Tl. eines vinylfunktionellen Siliconharzes, welches unter der Bezeichnung CRA 17 bei der Fa. Wacker Chemie GmbH erhältlich ist; 1.0 Gew.-Tl. eines Platin-Katalysators, welcher 1.0 Gew.-% Platin (als Element gerechnet) in Form eines Platin-sym-divinyltetramethyldisiloxan-Komplexes enthält, welcher in einem Dimethylvinyl-endständigem Polydimethylsiloxan (mit einer Viskosität von 1 Pa.s bei 25°C) gelöst ist.

### Beispiel 15 (nichterfindungsgemäßes Vergleichsbeispiel):

Die vernetzungsfähige Siliconbeschichtungsmasse wird hergestellt durch inniges Vermischen folgender Bestandteile: 40 Gew.-Tl. Dehesive® 920 (erhältlich bei der Fa. Wacker Chemie GmbH); 5.5 Gew.-Tl. eines Trimethylsiloxy-endständigen Poly[(dimethylsiloxan) (methylhydrogensiloxan)]-Copolymers, welches bei 25°C eine Viskosität von 35 mPa.s aufweist und einen H-Gehalt (Si-gebundener Wasserstoff) von 1.15 Gew.-% besitzt; 60 Gew.-Tl. eines vinylfunktionellen Siliconharzes, welches unter der Bezeichnung CRA 17 bei der Fa. Wacker Chemie GmbH erhältlich ist; 1.0 Gew.-Tl. eines Platin-Katalysators, welcher 1.0 Gew.-% Platin (als Element gerechnet) in Form eines Platin-sym-divinyltetramethyldisiloxan-Komplexes enthält, welcher in einem Dimethylvinyl-endständigem Polydimethylsiloxan (mit einer Viskosität von 1 Pa.s bei 25°C) gelöst ist.

### Beispiel 16:

Die vernetzungsfähige Siliconbeschichtungsmasse wird hergestellt durch inniges Vermischen folgender Bestandteile: 100 Gew.-Tl. Dehesive® 920 (erhältlich bei der Fa. Wacker Chemie GmbH); 7.5 Gew.-Tl. des in Beispiel 8 beschriebenen erfindungsgemäßen SiH-Vernetzers; 1.0 Gew.-Tl. eines Platin-Katalysators, welcher 1.0 Gew.-% Platin (als Element gerechnet) in Form eines Platin-sym-divinyltetramethyldisiloxan-Komplexes enthält, welcher in einem Dimethylvinyl-endständigem Polydimethylsiloxan (mit einer Viskosität von 1 Pa.s bei 25°C) gelöst ist.

### Beispiel 17:

Die vernetzungsfähige Siliconbeschichtungsmasse wird hergestellt durch inniges Vermischen folgender Bestandteile: 100 Gew.-Tl. Dehesive® 920 (erhältlich bei der Fa. Wacker Chemie GmbH); 10.0 Gew.-Tl. des in Beispiel 8 beschriebenen erfindungsgemäßen SiH-Vernetzers; 1.0 Gew.-Tl. eines Platin-Katalysators, welcher 1.0 Gew.-% Platin (als Element gerechnet) in Form eines Platin-sym-divinyltetramethyldisiloxan-Komplexes enthält, welcher in einem Dimethylvinyl-endständigen Polydimethylsiloxan (mit einer Viskosität von 1 Pa.s bei 25°C) gelöst ist.

Die in den Beispielen 14, 15, 16 und 17 beschriebenen vernetzungsfähigen Siliconbeschichtungsmassen wurden gemäß der bereits beschriebenen Verfahrensweise zur Herstellung siliconisierter Trennpapiere verwendet, mit den Besonderheiten, daß die nach Vermischen aller Bestandteile hergestellte vernetzungsfähige Siliconbeschichtungsmasse sofort anschließend, oder erst nach 4 Stunden, oder nach 24 Stunden auf das Pergaminpapier aufgebracht und vernetzt wurde. Zudem wurden verschiedene Vernetzungszeiten (zwischen 3 und 8 Sekunden) bei einer Temperatur von 150°C gewählt. Von den auf diese Weise hergestellten Siliconbeschichtungen wurde unmittelbar nach dem Vernetzungsschritt der extrahierbare Anteil bestimmt; die Ergebnisse sind in Tabelle 5 aufgelistet. Die in den Beispielen 14 und 16 bzw. 15 und 17 eingesetzten Mengen an SiH-Vernetzer wurden so bemessen, daß das molare SiH/SiCH=CH₂-Verhältnis in den Siliconbeschichtungsmassen Beispiel 14 und 16 bzw. 15 und 17 jeweils gleich ist, um Vergleichbarkeit der Ergebnisse zu gewährleisten.

**Tabelle 5:**

| Extrahierbarer Anteil in Abhängigkeit von Vernetzungszeit und Art des CRA | | | | | |
|---|---|---|---|---|---|
| Lagerzeit der vernetzungsfähigen Masse [h] | Vernetzungszeit [sek] | Beispiel 14 | Beispiel 15 | Beispiel 16 | Beispiel 17 |
| 0 | 6 | 4.6 | 8.2 | 3.2 | 3.2 |
| 0 | 5 | 6.7 | 10.7 | 3.4 | 3.2 |
| 0 | 4 | 7.6 | 11.2 | 4.1 | 4.2 |
| 0 | 3 | 13.2 | 17.3 | 6.5 | 5.8 |
| 4 | 6 | 5.9 | 9.8 | 4.0 | 3.2 |
| 4 | 5 | 8.3 | 12.1 | 3.9 | 4.0 |
| 4 | 4 | 13.4 | 18.7 | 5.2 | 5.3 |
| 4 | 3 | 21.9 | 26.8 | 15.3 | 16.2 |
| 24 | 8 | 5.1 | 9.7 | 3.5 | 3.5 |
| 24 | 6 | 7.9 | 12.8 | 6.5 | 6.4 |
| 24 | 4 | - | 30.4 | 26.3 | 24.2 |

Wie aus Tabelle 5 ersichtlich ist, weist das erfindungsgemäße Verfahren deutliche Vorteile im Hinblick auf migrierende, extrahierbare Bestandteile gegenüber dem herkömmlichen Verfahren (Siliconharze als CRA) auf. Auch nach Lagerung der vernetzungsfähigen Masse im Rahmen der vorgegebenen Topfzeit erweist sich das erfindungsgemäße Verfahren als überlegen. Da insbesondere bei kurzen Vernetzungszeiten im Fall des erfindungsgemäßen Verfahrens, trotz gleichen molaren
SiH/SiCH=CH₂-Verhältnisses der korrespondierenden Beispiele 14 und 16 bzw. 15 und 17, niedrigere Extraktwerte gefunden werden, kann unmittelbar auf eine erhöhte Vernetzungsgeschwindigkeit im Fall des erfindungsgemäßen Verfahrens geschlossen werden. Dies bestätigt auch die Anspringtemperaturen der Siliconbeschichtungsmassen (Beispiel 14 bis 17), die für die erfindungsgemäßen Massen (Beispiel 16 und 17) gemäß der DSC-Untersuchungen um ca. 5°C niedriger liegen als jene der vergleichbare Trennwerte ergebenden herkömmlichen Siliconharz-haltigen Siliconbeschichtungsmassen (Beispiel 14 und 15). Damit ist gezeigt, daß das erfindungsgemäße Verfahren (die erfindungsgemäßen Siliconbeschichtungsmassen) auch hinsichtlich Vernetzungsgeschwindigkeit und des Anteils migrierender Bestandteile deutliche Vorteile gegenüber den herkömmlichen Verfahren aufweist.

Dem Fachmann ist klar, daß die erfindungsgemäße Trennkraftregulierung nur dann von praktischem Wert ist, wenn die gezielt eingestellten Trennkraftwerte stabil sind, d.h., im Verlauf der Lagerung möglichst keine Veränderung erfahren. Dies ist deshalb besonders wichtig, weil der Verarbeitungszeitpunkt beim Kunden bzw. der Gebrauch der hergestellten Laminate in der Regel um Wochen oder Monaten später liegt. Diesbezüglich werden zwei Verfahren unterschieden: das off-line Verfahren, bei dem das siliconisierte Papier zunächst aufgerollt wird und erst später mit dem kleberhaltigen Material in Verbindung kommt, sowie das in-line Verfahren, bei welchem die Laminatbildung unmittelbar im Anschluß an die Siliconisierung des Substrates erfolgt. In beiden Fällen ist wichtig, daß die Trennkraftwerte über einen längeren Zeitraum hinweg stabil sind. Tatsächlich erweist sich das erfindungsgemäße Verfahren der Trennkraftregelung, wie nachfolgend gezeigt werden soll, auch in dieser Hinsicht als den herkömmlichen Verfahren überlegen. Hierzu wurden Langzeituntersuchungen durchgeführt, wobei die siliconisierten Pergaminpapiere gemäß dem off-line Verfahren im Anschluß an die während 5 Sekunden bei 150°C erfolgte Vernetzung und die 20 stündige Alterung bei 70°C einen längerer Zeitraum (bis zu 12 Wochen) bei 40°C gealtert wurden. Die in Tabelle 6 zusammengefaßten Ergebnisse verdeutlichen die ausgezeichnete Langzeitstabilität der unter Verwendung des erfindungsgemäßen Verfahrens gezielt eingestellten Trennkraft-werte, die bei einer Abzugsgeschwindigkeit von 0.3 m/min gegenüber unterschiedlichen Klebertypen bestimmt wurden.

**Tabelle 6:**

| Lagerzeitstabilität der gemäß des erfindungsgemäßen Verfahrens eingestellten Trennkraftwerte (Vernetzung 5 Sekunden bei 150°C; Abzugsgeschwindigkeit: 0.3 m/min) | | | | | | |
|---|---|---|---|---|---|---|
| Lagerzeit [Wochen] | Beispiel 16 Tesa 4154 TK [N/m] | Beispiel 16 Tesa 7475 TK [N/m] | Beispiel 16 Tesa 7476 TK [N/m] | Beispiel 17 Tesa 4154 TK [N/m] | Beispiel 17 Tesa 7475 TK [N/m] | Beispiel 17 Tesa 7476 TK [N/m] |
| 20 h | 12.7 | 27.3 | 25.4 | 28.7 | 41.9 | 24.3 |
| 1 | 12.6 | 33.2 | 20.1 | 30.7 | 51.3 | 19.9 |
| 2 | 13.1 | 31.8 | 22.6 | 33.3 | 53.9 | 22.1 |
| 3 | 13.1 | 30.9 | 20.9 | 33.0 | 54.9 | 23.3 |
| 4 | 13.4 | 32.7 | 25.1 | 35.5 | 53.0 | 26.5 |
| 6 | 14.1 | 30.9 | 24.2 | 31.4 | 54.7 | 30.2 |
| 8 | 15.2 | 35.6 | 28.0 | 33.5 | 55.2 | 28.7 |
| 12 | 15.9 | 37.2 | 30.1 | 37.1 | 58.1 | 30.7 |

## Patentansprüche

1. Verfahren zur Trennkraftregulierung von Siliconbeschichtungen, welche durch Vernetzung von Massen erhalten werden, welche die Bestandteile
(A) alkenylfunktionelles Polyorganosiloxan und
(B) SiH-funktionelles Organosiloxan umfassen,
wobei die Regulierung der Trennkraft durch Einsatz eines SiH-funktionellen Organosiloxans (B) erfolgt, das 0,1 bis 60 Mol-% an mit den Massen unverträglichen Resten aufweist, wobei die Reste mit den Massen dann als unverträglich gelten, wenn eine Mischung aus 1 Gewichtsteil SiH-funktionellem Organosiloxan (B), das 30 Mol-% an unverträglichen Resten, bezogen auf alle Reste im SiH-funktionellem Organosiloxan (B), aufweist und 9 Gewichtsteilen aus alkenylfunktionellem Polyorganosiloxan (A) bei 20 °C mehr als eine Phase bildet.

2. Verfahren nach Anspruch 1, bei dem die Trennkraft durch Erhöhung des Anteils an unverträglichen Resten im SiH-funktionellen Organosiloxan (B) erhöht wird.

3. Zu Siliconbeschichtungen vernetzbare Massen, umfassend die Bestandteile
(A) alkenylfunktionelles Polyorganosiloxan und
(B) SiH-funktionelles Organosiloxan,
wobei das SiH-funktionelle Organosiloxan (B) 0,1 bis 60 Mol-% an mit den Massen unverträglichen Resten aufweist, wobei die Reste mit den Massen dann als unvertraglich gelten, wenn eine Mischung aus 1 Gewichtsteil SiH-funktionellem Organosiloxan (B), das 30 Mol-% an unverträglichen Resten, bezogen auf alle Reste im SiH-funktionellem Organosiloxan (B), aufweist und 9 Gewichtsteilen aus alkenylfunktionellem Polyorganosiloxan (A) bei 20 °C mehr als eine Phase bildet.

4. Zu Siliconbeschichtungen vernetzbaren Massen nach Anspruch 3, nämlich additionsvernetzbare Siliconkautschukmassen, welche die Bestandteile
(A) alkenylfunktionelles Polyorganosiloxan,
(B) SiH-funktionelles Organosiloxan und
(C) Hydrosilylierungskatalysator
umfassen.

5. Zu Siliconbeschichtungen vernetzbare Massen nach Anspruch 3 oder 4, bei denen das alkenylfunktionelle (A) Polyorganosiloxan aus mindestens 90 Mol-% Struktureinheiten der allgemeinen Formel (1)
A₂SiO_{2/2} (1),
und Struktureinheiten der allgemeinen Formel (2)
RₐR¹ _{b}SiO_{(4-a-b)/2} (2),
zusammengesetzt ist, worin
**A** einen Methyl-, Ethyl-, Propyl- oder Butylrest,
**R** gleiche oder verschiedene einwertige, gegebenenfalls halogen- oder cyanosubstituierte, gegebenenfalls über eine organische zweiwertige Gruppe an Silicium gebundene C₁-C₁₀-Kohlenwasserstoffreste, die aliphatische Kohlenstoff-Kohlenstoff Mehrfachbindungen enthalten,
**R**^{**1**} gleiche oder verschiedene einwertige, gegebenenfalls halogen- oder cyanosubstituierte, über SiC-gebundene C₁-C₁₀-Kohlenwasserstoffreste, die frei sind von aliphatischen Kohlenstoff-Kohlenstoff Mehrfachbindungen und
**a und b** die Werte 0, 1, 2, oder 3 bedeuten, mit der Maßgabe, daß mindestens zwei Reste **R** in jedem Molekül vorhanden sind.

6. Zu Siliconbeschichtungen vernetzbare Massen nach einem der Ansprüche 3 bis 5, bei denen das SiH-funktionelle Organosiloxan (B) aus Struktureinheiten der allgemeinen Formel (3)
A_{c}R² _{d}SiO_{(4-c-d)/2} (3),
und Struktureinheiten der allgemeinen Formel (4)
HₑA_{f}R² _{g}SiO_{(4-e-f-g)/2} (4),
zusammengesetzt ist, worin
**R**^{**2**} von Wasserstoff und **A** verschiedene anorganische oder organische Reste,
**c und d** ! die Werte 0, 1, 2, oder 3,
**e** die Werte 1, 2, oder 3,
**f und g** die Werte 0, 1 oder 2 bedeuten, und **A** die vorstehenden Bedeutungen aufweist, mit der Maßgabe, daß **(d+g)** 0,1 bis 60 Mol-% von **(c+d+e+f+g)** aufweist, und in jedem Molekül mindestens 2 Struktureinheiten der allgemeinen Formel(4) vorhanden sind.

7. Zu Siliconbeschichtungen vernetzbare Massen nach Anspruch 4, bei denen die Hydrosilylierungskatalysatoren (C) ausgewählt werden aus Platin, Rhodium, Palladium, Ruthenium und Iridium und deren Verbindungen.

## Claims

1. Process for regulating the release force of silicone coatings which are obtained by crosslinking compositions whose constituents comprise
(A) alkenyl-functional polyorganosiloxane and
(B) SiH-functional organosiloxane
by using an SiH-functional organosiloxane (B) having from 0.1 to 60 mol-% of radicals which are incompatible with the compositions,
said radicals being regarded as incompatible with the compositions when a mixture of 1 part by weight of SiH-functional organosiloxane (B) having 30 mol-% of incompatible radicals, based on all the radicals in the SiH-functional organosiloxane (B), and 9 parts by weight of alkenyl-functional polyorganosiloxane (A) forms more than one phase at 20°C.

2. Process as according to Claim 1 wherein the release force is increased by increasing the content of incompatible radicals in the SiH-functional organosiloxane (B).

3. Compositions which can be crosslinked to give silicone coatings, whose constituents comprise
(A) alkenyl-functional polyorganosiloxane and
(B) SiH-functional organosiloxane,
the SiH-functional organosiloxane (B) having from 0.1 to 60 mol-% of radicals which are incompatible with the compositions,
said radicals being regarded as incompatible with the compositions when a mixture of 1 part by weight of SiH-functional organosiloxane (B) having 30 mol-% of incompatible radicals, based on all the radicals in the SiH-functional organosiloxane (B), and 9 parts by weight of alkenyl-functional polyorganosiloxane (A) forms more than one phase at 20°C.

4. Compositions which can be crosslinked to give silicone coatings, according to Claim 3, namely addition-crosslinkable silicone rubber compositions, whose constituents comprise
(A) alkenyl-functional polyorganosiloxane,
(B) SiH-functional organosiloxane and
(C) hydrosilylation catalyst.

5. Compositions which can be crosslinked to give silicone coatings, according to Claim 3 or 4, wherein the alkenyl-functional polyorganosiloxane (A) is composed of at least 90 mol-% of structural units of the general formula (1)
A₂SiO_{2/2} (1)
and structural units of the general formula (2)
RₐR¹ _{b}SiO_{(4-a-b)/2} (2)
in which
**A** is a methyl, ethyl, propyl or butyl radical,
**R** is identical or different at each occurrence and is monovalent, unsubstituted or halo- or cyano-substituted C₁-C₁₀ hydrocarbon radicals whose attachment to silicon may be by way of an organic divalent group and which contain aliphatic carbon-carbon multiple bonds,
**R**^{**1**} is identical or different at each occurrence and is monovalent, unsubstituted or halo- or cyano-substituted, SiC-bonded C₁-C₁₀ hydrocarbon radicals which are free from aliphatic carbon-carbon multiple bonds, and
**a and b** are 0, 1, 2 or 3, with the proviso that there are at least two radicals **R** in each molecule.

6. Compositions which can be crosslinked to give silicone coatings, according to any of Claims 3 to 5, wherein the SiH-functional organosiloxane (B) is composed of structural units of the general formula (3)
A_{c}R² _{d}SiO_{(4-c-d)/2} (3)
and structural units of the general formula (4)
HₑA_{f}R² _{g}SiO_{(4-e-f-g)/2} (4)
in which
**R**^{**2**} is organic or inorganic radicals other than hydrogen and **A**,
**c and d** are 0, 1, 2 or 3,
**e** is 1, 2 or 3,
**f and g** are 0, 1 or 2, and **A** is as defined above, with the proviso that
**(d+g)** has from 0.1 to 60 mol-% of **(c+d+e+f+g)** and each molecule includes at least 2 structural units of the general formula (4).

7. Compositions which can be crosslinked to give silicone coatings, according to Claim 4, wherein the hydrosilylation catalysts (C) are selected from platinum, rhodium, palladium, ruthenium and iridium and compounds thereof.

## Revendications

1. Procédé pour régler la force de séparation de revêtements de silicone, qui sont obtenus par la réticulation de masses, qui comprennent les constituants
(A) polyorganosiloxane à fonctionnalité alcényle et
(B) organosiloxane à fonctionnalité SiH,
la régulation de la force de séparation étant réalisée par l'utilisation d'un organosiloxane (B) à fonctionnalité SiH, qui présente 0,1 à 60% en mole de radicaux incompatibles avec les masses, les radicaux étant considérés comme incompatibles avec les masses lorsqu'un mélange de 1 partie en poids d'organosiloxane (B) à fonctionnalité SiH, qui présente 30% en mole de radicaux incompatibles par rapport à tous les radicaux dans l'organosiloxane (B) à fonctionnalité SiH, et de 9 parties en poids de polyorganosiloxane (A) à fonctionnalité alcényle forme plus d'une phase à 20°C.

2. Procédé selon la revendication 1, dans lequel la force de séparation est augmentée par l'augmentation de la proportion en radicaux incompatibles dans l'organosiloxane (B) à fonctionnalité SiH.

3. Masses réticulables en revêtements de silicone, comprenant les constituants
(A) polyorganosiloxane à fonctionnalité alcényle et
(B) organosiloxane à fonctionnalité SiH, l'organosiloxane (B) à fonctionnalité SiH présentant 0,1 à 60% en mole de radicaux incompatibles avec les masses, les radicaux étant considérés comme incompatibles avec les masses lorsqu'un mélange de 1 partie en poids d'organosiloxane (B) à fonctionnalité SiH, qui présente 30% en mole de radicaux incompatibles par rapport à tous les radicaux dans l'organosiloxane (B) à fonctionnalité SiH, et de 9 parties en poids de polyorganosiloxane (A) à fonctionnalité alcényle forme plus d'une phase à 20°C.

4. Masses réticulables en revêtements de silicone selon la revendication 3, à savoir des masses de caoutchouc de silicone réticulables par addition, comprenant les constituants
(A) polyorganosiloxane à fonctionnalité alcényle et
(B) organosiloxane à fonctionnalité SiH et
(C) catalyseur d'hydrosilylation.

5. Masses réticulables en revêtements de silicone selon les revendications 3 ou 4, dans lesquelles l'organopolysiloxane (A) à fonctionnalité alcényle est constitué d'au moins 90% en mole d'unités structurelles de formule générale (1)
A₂SiO_{2/2} (1)
et d'unités structurelles de formule générale (2)
RₐR¹ _{b}SiO_{(4-a-b)/2} (2)
dans lesquelles
A signifie un radical méthyle, éthyle, propyle ou butyle,
R signifie des radicaux hydrocarbonés en C₁ à C₁₀ identiques ou différents, monovalents, le cas échéant substitués par un halogène ou un cyano, le cas échéant liés par un groupement divalent organique au silicium, qui contiennent des liaisons multiples carbone-carbone aliphatiques,
R¹ signifie des radicaux hydrocarbonés en C₁ à C₁₀ identiques ou différents, monovalents, le cas échéant substitués par un halogène ou un cyano, liés par SiC, qui sont exempts de liaisons multiples carbone-carbone aliphatiques et
a et b signifient les valeurs 0, 1, 2 ou 3, sous réserve gu'au moins deux radicaux R soient présents dans chaque molécule.

6. Masses réticulables en revêtements de silicone selon l'une quelconque des revendications 3 à 5, dans lesquelles l'organosiloxane (B) à fonctionnalité SiH est constitué d'unités structurelles de formule générale (3)
A_{c}R² _{d}SiO_{(4-c-d)/2} (3)
et d'unités structurelles de formule générale (4)
HₑA_{f}R² _{g}SiO_{(4-e-f-g)/2} (4)
dans lesquelles
R² signifie des radicaux inorganiques ou organiques différents d'hydrogène et de A,
c et d signifient les valeurs 0, 1, 2 ou 3,
e signifie les valeurs 1, 2 ou 3,
f et g signifient les valeurs 0, 1 ou 2 et A présente les significations ci-dessus, sous réserve que (d+g) représente 0,1 à 60% en mole de (c+d+e+f+g), et que dans chaque molécule au moins deux unités structurelles de formule générale (4) soient présentes.

7. Masses réticulables en revêtements de silicone selon la revendication 4, dans lesquelles les catalyseurs d'hydrosilylation (C) sont choisis parmi le platine, le rhodium, le palladium, le ruthénium et l'iridium et leurs composés.
